# EUROPEAN PATENT APPLICATION

(11) **EP 4 021 114 A1**
(43) Date of publication of application: **29.06.2022**
(21) Application number: 20856531.7
(22) Date of filing: 21.08.2020
(51) Int. Cl.: H04W 72/04

(54) **SRS TRANSMISSION METHOD AND APPARATUS**

(30) Priority: 30.08.2019 CN 201910818018
(71) Applicant: Huawei Technologies Co., Ltd., Longgang District Shenzhen, Guangdong 518129 (CN)
(72) Inventor: ZHENG, Juan, Shenzhen, Guangdong 518129 (CN); LI, Chaojun, Shenzhen, Guangdong 518129 (CN)
(74) Representative: Gill Jennings & Every LLP
(86) International application number: PCT/CN2020/110568
(87) International publication number: WO 2021/036942

(57) **Abstract**

An SRS transmission method and apparatus are provided, to improve data transmission efficiency of a terminal device with a low bandwidth capability. The method includes: A terminal device determines a first frequency band, and receives SRS configuration information from a network device, where the SRS configuration information is used to indicate an SRS transmission frequency band. The terminal device determines the SRS transmission frequency band based on the SRS configuration information, where the SRS transmission frequency band is included in the first frequency band. The terminal device transmits an SRS to the network device in the SRS transmission frequency band. A bandwidth of the first frequency band is greater than a maximum channel bandwidth supported by the terminal device. According to the foregoing method, the terminal device can transmit an SRS within a larger frequency resource range, or a bandwidth corresponding to a transmission frequency band of the SRS is more suitable for a terminal device with a low bandwidth capability. Therefore, it is ensured that more reference information can be provided through SRS measurement for data transmission between the network device and the terminal device, thereby improving data transmission efficiency.

## Description

This application claims priority to Chinese Patent Application No. 201910818018.5, filed with the China National Intellectual Property Administration on August 30, 2019 and entitled "SRS TRANSMISSION METHOD AND APPARATUS", which is incorporated herein by reference in its entirety.

### TECHNICAL FIELD

This application relates to the field of communication technologies, and in particular, to a sounding reference signal (sounding reference signal, SRS) transmission method and apparatus.

### BACKGROUND

5th generation (5th generation, 5G) mobile communication technology new radio (new radio, NR) is a global 5G standard for a brand-new air interface designed for orthogonal frequency division multiplexing (orthogonal frequency division multiplexing, OFDM). It is also a very important foundation for a next-generation cellular mobile technology. Services of the 5G technology are diversified and include enhanced mobile broadband (enhanced mobile broadband, eMBB) services, ultra-reliable low-latency communication (ultra-reliable low-latency communication, URLLC) services, and massive machine-type communications (massive machine-type communications, mMTC) services.

Machine-type communication is a basis of internet of everything. For currently implemented Machine-type communication, a data transmission amount of a terminal device is small, and a latency requirement is low. For this reason, from a perspective of meeting a data transmission rate, a bandwidth of the terminal device is small. For example, an MTC terminal device and a narrowband internet of things (narrowband internet of things, NB-IoT) terminal device in a long term evolution (long term evolution, LTE) system respectively have a bandwidth capability of only 1.4 MHz and only 180 kHz or 200 kHz

Currently, in an NR system, a data transmission rate in some research scenarios is generally higher than a data transmission rate of the 1.4 MHz MTC terminal device and the 180 kHz NB-IoT terminal device in the LTE system. A bandwidth capability of a terminal device in the Machine-type communication needs to be larger. However, considering a relationship between bandwidths and terminal device costs (a smaller bandwidth indicates lower device costs), the bandwidth capability of the terminal device in the Machine-type communication does not need to be excessively large. Therefore, more attention has been paid to the research on such terminal devices. Compared with LTE machine terminal devices, such terminal devices have a higher bandwidth capability but may be considered as terminal devices with a low bandwidth capability in the NR system. For example, a terminal device with a bandwidth capability of 3.6 MHz is a device with a high bandwidth capability in the LTE system, but a device with a low bandwidth capability in the NR system.

A network device may determine, based on an SRS sent by a terminal device, a status of a channel between the network device and the terminal device, to ensure efficiency of data transmission between the network device and the terminal device. Generally, the network device may configure an SRS transmission bandwidth and an SRS frequency hopping bandwidth for the terminal device. The terminal device may transmit an SRS within the SRS frequency hopping bandwidth, and a bandwidth for each transmission is equal to the SRS transmission bandwidth. Currently, bandwidth capabilities of terminal devices in the NR system are also diversified. For example, as specified in the 3rd generation partner project (3rd generation partner project, 3GPP) protocol (3GPP TS 38.101-1), the bandwidth capabilities of the terminal devices in the 5G system range from 5 MHz to 100 MHz. Although the 5G system has a large terminal bandwidth range, some terminal devices with low bandwidth capabilities (for example, a terminal device whose maximum transmission bandwidth is 5 MHz or 10 MHz) are not specially designed based on bandwidths. In this case, for a terminal device of this type, limited channel state information is obtained by using an SRS, and data transmission efficiency of the terminal device is limited.

### SUMMARY

This application provides an SRS transmission method and apparatus, to improve data transmission efficiency of a terminal device with a low bandwidth capability.

According to a first aspect, this application provides an SRS transmission method. The method includes: A terminal device determines a first frequency band, and receives SRS configuration information from a network device, where the SRS configuration information is used to indicate an SRS transmission frequency band. The terminal device determines the SRS transmission frequency band based on the SRS configuration information, where a bandwidth of the SRS transmission frequency band is smaller than or equal to a maximum channel bandwidth supported by the terminal device, and the SRS transmission frequency band is included in the first frequency band. The terminal device transmits an SRS to the network device in the SRS transmission frequency band, where a bandwidth of the first frequency band is greater than the maximum channel bandwidth supported by the terminal device.

According to the foregoing method, the terminal device can transmit an SRS within a larger frequency resource range, or a bandwidth corresponding to a transmission frequency band of the SRS is more suitable for a terminal device with a low bandwidth capability. Therefore, it is ensured that more reference information, for example, channel state information within a larger frequency range, can be provided through SRS measurement for data transmission between the network device and the terminal device, so that the network device can allocate a frequency resource suitable for the terminal device within the larger frequency range, thereby improving data transmission efficiency.

In a possible design, the bandwidth of the first frequency band is smaller than or equal to a carrier bandwidth.

In a possible design, a specific method used by the terminal device to determine the first frequency band may be: The terminal device receives first information from the network device, where the first information is used to indicate the first frequency band; and the terminal device determines the first frequency band based on the first information; or the first frequency band is predefined.

According to the foregoing method, the terminal device can accurately determine the first frequency band, so that the terminal device can transmit data.

In a possible design, the SRS configuration information further includes an SRS frequency hopping bandwidth; the SRS frequency hopping bandwidth is greater than or equal to the bandwidth corresponding to the SRS transmission frequency band; and the bandwidth of the first frequency band is greater than the SRS frequency hopping bandwidth. In this way, the bandwidth of the SRS transmission frequency band used by the terminal device and the network device to transmit the SRS may not exceed the SRS frequency hopping bandwidth.

In a possible design, the terminal device receives second information from the network device, where the second information is used to indicate a second frequency band; and the terminal device determines the second frequency band based on the second information, where the second frequency band is included in the first frequency band, and a bandwidth of the second frequency band is smaller than or equal to the maximum channel bandwidth supported by the terminal device.

According to the foregoing method, the terminal device can accurately determine the second frequency band, so as to accurately transmit data subsequently.

In a possible design, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

According to the foregoing method, the second frequency band can be accurately indicated by using the second information.

In a possible design, the second information includes a first index, and the first index corresponds to the second frequency band in the first frequency band. A specific method used by the terminal device to determine the second frequency band based on the second information may be: The terminal device determines the second frequency band based on the first index and a correspondence between the first index and the second frequency band.

According to the foregoing method, the second frequency band can be accurately indicated by using the second information.

In a possible design, the terminal device determines a second frequency band based on at least one of the following: a time location at which the terminal device transmits an SRS, a quantity of SRS transmissions, the SRS frequency hopping bandwidth, an SRS transmission bandwidth, and information related to the first frequency band. The information related to the first frequency band is an index of the first frequency band or a frequency domain resource location corresponding to the first frequency band. The second frequency band is included in the first frequency band, and a bandwidth of the second frequency band is smaller than or equal to the maximum channel bandwidth supported by the terminal device.

According to the foregoing method, the terminal device can accurately determine the second frequency band, so as to accurately transmit data subsequently.

In a possible design, the second frequency band is predefined.

In a possible design, the bandwidth of the second frequency band is greater than or equal to the SRS frequency hopping bandwidth. In this way, the SRS is transmitted between the terminal device and the network device within the second frequency band.

In a possible design, the terminal device determines to transmit SRSs in OFDM symbols included in different slots.

In a possible design, the terminal device obtains a first frequency band set, where the first frequency band set includes a frequency band greater than the maximum channel bandwidth supported by the terminal device, or the first frequency band set includes a frequency band smaller than or equal to the maximum channel bandwidth supported by the terminal device and a frequency band greater than the maximum channel bandwidth supported by the terminal device. A specific method used by the terminal device to determine the first frequency band may be: The terminal device determines the first frequency band based on the first frequency band set.

According to the foregoing method, the terminal device can accurately determine the first frequency band, so as to transmit data subsequently.

In a possible design, the first frequency band may be a bandwidth part (bandwidth part, BWP).

According to a second aspect, this application provides an SRS transmission method. The method includes: A network device sends SRS configuration information to a terminal device, where the SRS configuration information is used to indicate an SRS transmission frequency band, and a bandwidth of the SRS transmission frequency band is smaller than or equal to a maximum channel bandwidth supported by the terminal device. The network device receives an SRS transmitted by the terminal device in the SRS transmission frequency band. The SRS transmission frequency band is determined by the terminal device based on the SRS configuration information, the SRS transmission frequency band is included in a first frequency band, and a bandwidth of the first frequency band is greater than the maximum channel bandwidth supported by the terminal device.

According to the foregoing method, the terminal device can transmit an SRS within a larger frequency resource range, or a bandwidth corresponding to a transmission frequency band of the SRS is more suitable for a terminal device with a low bandwidth capability. Therefore, it is ensured that more reference information can be provided through SRS measurement for data transmission between the network device and the terminal device, thereby ensuring data transmission efficiency.

In a possible design, the bandwidth of the first frequency band is smaller than or equal to a carrier bandwidth.

In a possible design, the network device sends first information to the terminal device, where the first information is used to indicate the first frequency band.

According to the foregoing method, the terminal device can accurately determine the first frequency band, so as to transmit data subsequently.

In a possible design, the SRS configuration information further includes an SRS frequency hopping bandwidth; the SRS frequency hopping bandwidth is greater than or equal to the bandwidth corresponding to the SRS transmission frequency band; and the bandwidth of the first frequency band is greater than the SRS frequency hopping bandwidth. In this way, the bandwidth of the SRS transmission frequency band used by the terminal device and the network device to transmit the SRS may not exceed the SRS frequency hopping bandwidth.

In a possible design, the network device sends second information to the terminal device, where the second information is used to indicate a second frequency band, the second frequency band is included in the first frequency band, and a bandwidth of the second frequency band is smaller than or equal to the maximum channel bandwidth supported by the terminal device.

According to the foregoing method, the terminal device can accurately determine the second frequency band, so as to accurately transmit data subsequently.

In a possible design, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

According to the foregoing method, the second frequency band can be accurately indicated by the terminal device by using the second information.

In a possible design, the second information includes a first index, and the first index corresponds to the second frequency band in the first frequency band.

According to the foregoing method, the second frequency band can be accurately indicated by the terminal device by using the second information.

In a possible design, the bandwidth of the second frequency band is greater than or equal to the SRS frequency hopping bandwidth. In this way, the SRS is transmitted between the terminal device and the network device within the second frequency band.

In a possible design, the network device configures a second frequency band set for the terminal device, where the second frequency band set includes a frequency band greater than the maximum channel bandwidth supported by the terminal device, or the second frequency band set includes a frequency band smaller than or equal to the maximum channel bandwidth supported by the terminal device and a frequency band greater than the maximum channel bandwidth supported by the terminal device. In this way, the terminal device subsequently can accurately determine the first frequency band to transmit data.

In a possible design, the first frequency band may be a BWP.

According to a third aspect, this application provides an SRS transmission method. The method includes: A terminal device determines a first SRS configuration information set, where the first SRS configuration information set includes at least two pieces of SRS configuration information. The terminal device determines target SRS configuration information based on the first SRS configuration information set, where the target SRS configuration information is used to indicate a target SRS transmission frequency band. The terminal device determines the target SRS transmission frequency band based on the target SRS configuration information, where a bandwidth of the SRS transmission frequency band is smaller than or equal to a maximum channel bandwidth supported by the terminal device. The terminal device transmits an SRS to a network device in the target SRS transmission frequency band. In this way, data transmission of a terminal device with a low bandwidth capability can be implemented, and transmission efficiency of the terminal device with a low bandwidth capability can be ensured.

In a possible design, a specific method used by the terminal device to determine the first SRS configuration information set may be: The terminal device determines the first SRS configuration information set in at least one SRS configuration information set based on the maximum channel bandwidth supported by the terminal device. Alternatively, the terminal device receives third information from the network device, where the third information is used to indicate the first SRS configuration information set to be used by the terminal device. The terminal device determines the first SRS configuration information set based on the third information.

According to the foregoing method, the terminal device can accurately determine the first SRS configuration information set.

According to a fourth aspect, this application provides an SRS transmission method. The method includes: A network device receives, in a target SRS transmission frequency band, an SRS sent by a terminal device, where the target SRS transmission frequency band is determined by the terminal device based on target SRS configuration information, and the target SRS configuration information is used to indicate the target SRS transmission frequency band. In this way, data transmission of a terminal device with a low bandwidth capability can be implemented, and transmission efficiency of the terminal device with a low bandwidth capability can be ensured.

In a possible design, the network device receives third information from the terminal device, where the third information is used to indicate a first SRS configuration information set to be used by the terminal device, and the terminal device determines the first SRS configuration information set based on the third information.

According to the foregoing method, the terminal device can accurately determine the first SRS configuration information set, so as to determine the target SRS configuration information subsequently.

According to a fifth aspect, this application further provides an SRS transmission apparatus. The SRS transmission apparatus includes:
a processor, configured to determine a first frequency band, where a bandwidth of the first frequency band is greater than a maximum channel bandwidth supported by the terminal device; and
a transceiver, configured to receive SRS configuration information from a network device, where the SRS configuration information is used to indicate an SRS transmission frequency band.

The processor is further configured to determine the SRS transmission frequency band based on the SRS configuration information, where the SRS transmission frequency band is included in the first frequency band.

The transceiver is further configured to transmit an SRS to the network device in the SRS transmission frequency band.

In a possible design, the bandwidth of the first frequency band is smaller than or equal to a carrier bandwidth.

In a possible design, the transceiver is further configured to receive first information from the network device, where the first information is used to indicate the first frequency band; and
when determining the first frequency band, the processor is specifically configured to determine the first frequency band based on the first information; or the first frequency band is predefined.

In a possible design, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In a possible design, the transceiver is further configured to receive second information from the network device, where the second information is used to indicate a second frequency band; and
the processor is further configured to determine the second frequency band based on the second information, where the second frequency band is included in the first frequency band, and a bandwidth of the second frequency band is smaller than or equal to the maximum channel bandwidth supported by the terminal device.

In a possible design, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In a possible design, the second information includes a first index, and the first index corresponds to the second frequency band in the first frequency band; and
when determining the second frequency band based on the second information, the processor is specifically configured to determine the second frequency band based on the first index and a correspondence between the first index and the second frequency band.

In a possible design, the processor is further configured to determine a second frequency band based on at least one of the following: a time location at which the terminal device transmits an SRS, a quantity of SRS transmissions, the SRS frequency hopping bandwidth, an SRS transmission bandwidth, and information related to the first frequency band. The information related to the first frequency band is an index of the first frequency band or a frequency domain resource location corresponding to the first frequency band. The second frequency band is included in the first frequency band, and a bandwidth of the second frequency band is smaller than or equal to the maximum channel bandwidth supported by the terminal device.

In a possible design, the bandwidth of the second frequency band is greater than or equal to the SRS frequency hopping bandwidth.

In a possible design, the processor is further configured to determine to transmit SRSs in OFDM symbols included in different slots.

In a possible design, the processor is further configured to obtain a first frequency band set, where the first frequency band set includes a frequency band greater than the maximum channel bandwidth supported by the terminal device, or the first frequency band set includes a frequency band smaller than or equal to the maximum channel bandwidth supported by the terminal device and a frequency band greater than the maximum channel bandwidth supported by the terminal device; and
when determining the first frequency band, the processor is specifically configured to determine the first frequency band based on the first frequency band set.

According to a sixth aspect, this application further provides an SRS transmission apparatus. The SRS transmission apparatus includes:
a processing unit, configured to determine a first frequency band, where a bandwidth of the first frequency band is greater than a maximum channel bandwidth supported by the terminal device; and
a transceiver unit, configured to receive SRS configuration information from a network device, where the SRS configuration information is used to indicate an SRS transmission frequency band.

The processing unit is further configured to determine the SRS transmission frequency band based on the SRS configuration information, where the SRS transmission frequency band is included in the first frequency band.

The transceiver unit is further configured to transmit an SRS to the network device in the SRS transmission frequency band.

In a possible design, the bandwidth of the first frequency band is smaller than or equal to a carrier bandwidth.

In a possible design, the transceiver unit is further configured to receive first information from the network device, where the first information is used to indicate the first frequency band; and
when determining the first frequency band, the processing unit is specifically configured to determine the first frequency band based on the first information; or the first frequency band is predefined.

In a possible design, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In a possible design, the transceiver unit is further configured to receive second information from the network device, where the second information is used to indicate a second frequency band; and
the processing unit is further configured to determine the second frequency band based on the second information, where the second frequency band is included in the first frequency band, and a bandwidth of the second frequency band is smaller than or equal to the maximum channel bandwidth supported by the terminal device.

In a possible design, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In a possible design, the second information includes a first index, and the first index corresponds to the second frequency band in the first frequency band; and
when determining the second frequency band based on the second information, the processing unit is specifically configured to determine the second frequency band based on the first index and a correspondence between the first index and the second frequency band.

In a possible design, the processing unit is further configured to determine the second frequency band based on at least one of the following: a time location at which the terminal device transmits an SRS, a quantity of SRS transmissions, the SRS frequency hopping bandwidth, an SRS transmission bandwidth, and information related to the first frequency band. The information related to the first frequency band is an index of the first frequency band or a frequency domain resource location corresponding to the first frequency band. The second frequency band is included in the first frequency band, and a bandwidth of the second frequency band is smaller than or equal to the maximum channel bandwidth supported by the terminal device.

In a possible design, the bandwidth of the second frequency band is greater than or equal to the SRS frequency hopping bandwidth.

In a possible design, the processing unit is further configured to determine to transmit SRSs in OFDM symbols included in different slots.

In a possible design, the processing unit is further configured to obtain a first frequency band set, where the first frequency band set includes a frequency band greater than the maximum channel bandwidth supported by the terminal device, or the first frequency band set includes a frequency band smaller than or equal to the maximum channel bandwidth supported by the terminal device and a frequency band greater than the maximum channel bandwidth supported by the terminal device; and
when determining the first frequency band, the processing unit is specifically configured to determine the first frequency band based on the first frequency band set.

According to a seventh aspect, this application further provides an SRS transmission apparatus. The SRS transmission apparatus includes:
a transceiver, configured to: send SRS configuration information to a terminal device, where the SRS configuration information is used to indicate an SRS transmission frequency band; and
receive an SRS transmitted by the terminal device in the SRS transmission frequency band, where
the SRS transmission frequency band is determined by the terminal device based on the SRS configuration information, the SRS transmission frequency band is included in a first frequency band, and a bandwidth of the first frequency band is greater than a maximum channel bandwidth supported by the terminal device; and
a processor, configured to control the transceiver to send and receive data.

In a possible design, the bandwidth of the first frequency band is smaller than or equal to a carrier bandwidth.

In a possible design, the transceiver is further configured to send first information to the terminal device, where the first information is used to indicate the first frequency band.

In a possible design, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In a possible design, the transceiver is further configured to send second information to the terminal device, where the second information is used to indicate a second frequency band, the second frequency band is included in the first frequency band, and a bandwidth of the second frequency band is smaller than or equal to the maximum channel bandwidth supported by the terminal device.

In a possible design, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In a possible design, the second information includes a first index, and the first index corresponds to the second frequency band in the first frequency band.

In a possible design, the bandwidth of the second frequency band is greater than or equal to the SRS frequency hopping bandwidth.

In a possible design, the processor is further configured to configure a second frequency band set for the terminal device, where the second frequency band set includes a frequency band greater than the maximum channel bandwidth supported by the terminal device, or the second frequency band set includes a frequency band smaller than or equal to the maximum channel bandwidth supported by the terminal device and a frequency band greater than the maximum channel bandwidth supported by the terminal device.

According to an eighth aspect, this application further provides an SRS transmission apparatus. The SRS transmission apparatus includes:
a transceiver unit, configured to: send SRS configuration information to a terminal device, where the SRS configuration information is used to indicate an SRS transmission frequency band, and
receive an SRS transmitted by the terminal device in the SRS transmission frequency band, where
the SRS transmission frequency band is determined by the terminal device based on the SRS configuration information, the SRS transmission frequency band is included in a first frequency band, and a bandwidth of the first frequency band is greater than a maximum channel bandwidth supported by the terminal device; and
a processing unit, configured to control the transceiver unit to send and receive data.

In a possible design, the bandwidth of the first frequency band is smaller than or equal to a carrier bandwidth.

In a possible design, the transceiver unit is further configured to send first information to the terminal device, where the first information is used to indicate the first frequency band.

In a possible design, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In a possible design, the transceiver unit is further configured to send second information to the terminal device, where the second information is used to indicate a second frequency band, the second frequency band is included in the first frequency band, and a bandwidth of the second frequency band is smaller than or equal to the maximum channel bandwidth supported by the terminal device.

In a possible design, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In a possible design, the second information includes a first index, and the first index corresponds to the second frequency band in the first frequency band.

In a possible design, the bandwidth of the second frequency band is greater than or equal to the SRS frequency hopping bandwidth.

In a possible design, the processing unit is further configured to configure a second frequency band set for the terminal device, where the second frequency band set includes a frequency band greater than the maximum channel bandwidth supported by the terminal device, or the second frequency band set includes a frequency band smaller than or equal to the maximum channel bandwidth supported by the terminal device and a frequency band greater than the maximum channel bandwidth supported by the terminal device.

According to a ninth aspect, this application further provides an SRS transmission apparatus. The SRS transmission apparatus includes:
a processor, configured to determine a first SRS configuration information set, where the first SRS configuration information set includes at least two pieces of SRS configuration information;
determine target SRS configuration information based on the first SRS configuration information set, where the target SRS configuration information is used to indicate a target SRS transmission frequency band; and
determine the target SRS transmission frequency band based on the target SRS configuration information; and
a transceiver, configured to transmit an SRS to a network device in the target SRS transmission frequency band.

In a possible design, when determining the first SRS configuration information set, the processor is specifically configured to:
determine the first SRS configuration information set in at least one SRS configuration information set based on a maximum channel bandwidth supported by the terminal device; or
control the transceiver to receive third information from the network device, where the third information is used to indicate the first SRS configuration information set to be used by the terminal device, and determine the first SRS configuration information set based on the third information.

According to a tenth aspect, this application further provides an SRS transmission apparatus. The SRS transmission apparatus includes:
a processing unit, configured to determine a first SRS configuration information set, where the first SRS configuration information set includes at least two pieces of SRS configuration information;
determine target SRS configuration information based on the first SRS configuration information set, where the target SRS configuration information is used to indicate a target SRS transmission frequency band; and
determine the target SRS transmission frequency band based on the target SRS configuration information; and
a transceiver unit, configured to transmit an SRS to a network device in the target SRS transmission frequency band.

In a possible design, when determining the first SRS configuration information set, the processing unit is specifically configured to:
determine the first SRS configuration information set in at least one SRS configuration information set based on a maximum channel bandwidth supported by the terminal device; or
control the transceiver unit to receive third information from the network device, where the third information is used to indicate the first SRS configuration information set to be used by the terminal device, and determine the first SRS configuration information set based on the third information.

According to an eleventh aspect, this application further provides an SRS transmission apparatus. The SRS transmission apparatus includes:
a transceiver, configured to receive, in a target SRS transmission frequency band, an SRS sent by a terminal device, where the target SRS transmission frequency band is determined by the terminal device based on target SRS configuration information, and the target SRS configuration information is used to indicate the target SRS transmission frequency band; and
a processor, configured to control the transceiver to send and receive data (or information, a signal, or the like).

In a possible design, the transceiver is further configured to send third information to the terminal device, where the third information is used to indicate a first SRS configuration information set to be used by the terminal device.

According to a twelfth aspect, this application further provides an SRS transmission apparatus. The SRS transmission apparatus includes:
a transceiver unit, configured to receive, in a target SRS transmission frequency band, an SRS sent by a terminal device, where the target SRS transmission frequency band is determined by the terminal device based on target SRS configuration information, and the target SRS configuration information is used to indicate the target SRS transmission frequency band; and
a processing unit, configured to control the transceiver unit to send and receive data (or information, a signal, or the like).

In a possible design, the transceiver unit is further configured to send third information to the terminal device, where the third information is used to indicate a first SRS configuration information set to be used by the terminal device.

According to a thirteenth aspect, this application further provides a communication system. The communication system includes the terminal device and the network device mentioned in at least one of the foregoing designs. Further, the network device in the communication system may perform any method performed by the network device in the foregoing methods, and the terminal device in the communication system may perform any method performed by the terminal device in the foregoing methods.

According to a fourteenth aspect, this application provides a computer-readable storage medium. The computer-readable storage medium stores computer-executable instructions. When invoked by a computer, the computer-executable instructions are used to enable the computer to perform any method in any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

According to a fifteenth aspect, this application provides a computer program product including instructions. When the computer program product runs on a computer, the computer is enabled to perform any method in any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

According to a sixteenth aspect, this application provides a chip. The chip is coupled to a memory, and is configured to read and execute program instructions stored in the memory, to implement any method in any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

### BRIEF DESCRIPTION OF DRAWINGS

FIG. 1 is a schematic diagram of a bandwidth capability according to this application;
FIG. 2 is a schematic diagram of a synchronization signal block according to this application;
FIG. 3 is a diagram of an architecture of a communication system according to this application;
FIG. 4 is a flowchart of an SRS transmission method according to this application;
FIG. 5 shows a relationship between a bandwidth of a first frequency band, a frequency hopping bandwidth, and a bandwidth corresponding to a transmission frequency band according to this application;
FIG. 6 is a schematic diagram of a bandwidth corresponding to an SRS transmission frequency band according to this application;
FIG. 7 is a schematic diagram of a bandwidth corresponding to another SRS transmission frequency band according to this application;
FIG. 8 is a schematic diagram of an offset between a frequency domain start location of a first frequency band and that of a second frequency band according to this application;
FIG. 9 is a schematic diagram of a relationship between a first frequency band, a second frequency band, a frequency hopping bandwidth, and a transmission frequency band according to this application;
FIG. 10 is a schematic diagram of a second frequency band and an SRS frequency hopping band according to this application;
FIG. 11 is a flowchart of another SRS transmission method according to this application;
FIG. 12 is a schematic diagram of a structure of an SRS transmission apparatus according to this application; and
FIG. 13 is a diagram of a structure of an SRS transmission apparatus according to this application.

### DESCRIPTION OF EMBODIMENTS

The following further describes in detail this application with reference to the accompanying drawings.

Embodiments of this application provide an SRS transmission method and apparatus, to improve data transmission efficiency of a terminal device with a low bandwidth capability. The method and the apparatus described in this application are based on a same inventive idea. Because problem resolving principles of the method and the apparatus are similar, mutual reference may be made to implementations of the apparatus and the method. Repeated parts are not described.

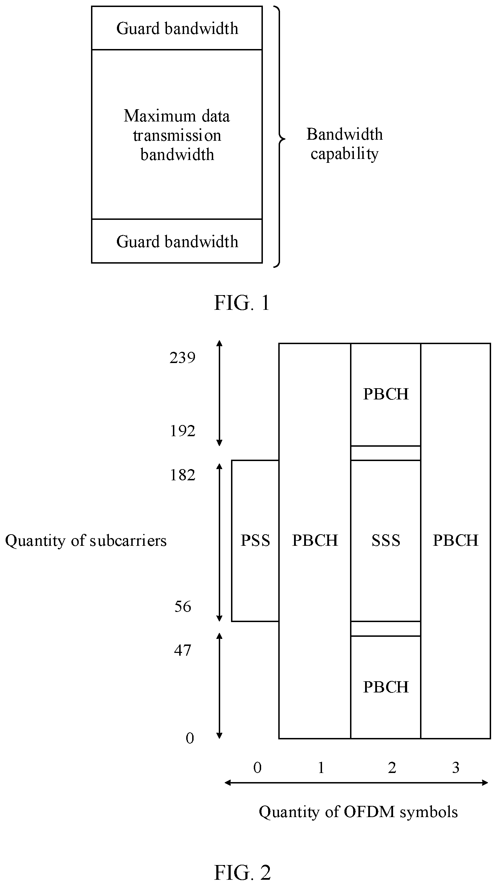

In the following, some terms in this application are described, to help a person skilled in the art have a better understanding.
(1) A carrier (carrier) bandwidth is also referred to as a system bandwidth, and may also be represented by a transmission bandwidth of a carrier. A network device may configure one or more carriers. Correspondingly, transmission bandwidths corresponding to the one or more carriers configured by the network device may be understood as system bandwidths. For example, if one network device configures one carrier, and a transmission bandwidth of the carrier is 100 MHz (megahertz), it may be considered that the system bandwidth is 100 MHz. For another example, if one network device configures five carriers, and a transmission bandwidth of each carrier is 20 MHz, it may also be considered that the system bandwidth is 100 MHz. For ease of describing the solution, in this application, an example in which the system bandwidth corresponds to the transmission bandwidth of one carrier is used for description.
(2) Maximum channel bandwidth supported by a terminal device, namely, bandwidth capability of the terminal device. It may be understood that the maximum channel bandwidth supported by the terminal device is a maximum frequency resource that can be used simultaneously when the terminal device transmits data. The maximum frequency resource that can be used simultaneously may be maximum frequency resources that can be simultaneously used and that are continuous in frequency domain, and/or maximum frequency resources that can be used simultaneously by the terminal device on one carrier. For example, if a bandwidth capability of a terminal device is 5 MHz, it indicates that when data transmission (including receiving of downlink data and/or sending of uplink data) is performed between the terminal device and the network device, the terminal device may be scheduled in a frequency band corresponding to a transmission bandwidth other than a guard bandwidth on a frequency resource of 5 MHz at most, that is, scheduled in a frequency band corresponding to "the maximum data transmission bandwidth" shown in FIG. 1. It should be noted that, in this application, although the maximum frequency resource used by the terminal device with a bandwidth capability of 5 MHz when the terminal device performs data transmission is less than 5 MHz (excluding the guard bandwidth), for simplicity of description, it may also be understood that the maximum frequency resource that can be used is equal to the bandwidth capability.
(3) A terminal device with a low bandwidth capability may have the following three understandings in this application:

First understanding: The bandwidth capability of the terminal device is equal to a minimum bandwidth required for accessing an NR system.

In this application, the minimum bandwidth required for accessing the NR system may be understood as a necessary guard bandwidth and a transmission bandwidth corresponding to a downlink signal/information to be obtained by the terminal device for accessing the NR system. Alternatively, the minimum bandwidth required for accessing the NR system may be understood as a transmission bandwidth corresponding to a downlink signal/information to be obtained by the terminal device for accessing the NR system. It should be noted that, in the first manner of understanding "the terminal device with a low bandwidth capability", when the bandwidth capability of the terminal device is compared with the minimum bandwidth required for accessing the NR system, the two include the necessary guard bandwidth, or do not include the necessary guard bandwidth.

Currently, access to the NR system requires at least the following downlink signals/information:

a1. Synchronization signal block (synchronization signal block, SSB): The SSB includes a primary synchronization signal (primary synchronization signal, PSS), a secondary synchronization signal (secondary synchronization signal, SSS), and a physical broadcast channel (physical broadcast channel, PBCH). The SSB occupies four orthogonal frequency division multiplexing (orthogonal frequency division multiplexing, OFDM) symbols in time domain. The PSS and the SSS are respectively transmitted in the first and third OFDM symbols, and a corresponding transmission bandwidth is 12 resource blocks (resource blocks, RBs) (where more accurately, the transmission bandwidth of the PSS and the SSS corresponds to 127 subcarriers). Information included in the PBCH is transmitted in the second, third, and fourth OFDM symbols. In the second and fourth OFDM symbols, a transmission bandwidth is 20 RBs (corresponding to 240 subcarriers), and in the third OFDM symbol, a transmission bandwidth is eight RBs (corresponding to 96 subcarriers). For example, the transmission bandwidth may be shown in FIG. 2.

Based on FIG. 2, it may be understood that a transmission bandwidth corresponding to the SSB is 20 RBs. One RB includes 12 subcarriers. Therefore, due to different subcarrier spacings (subcarrier spacings, SCSs), transmission bandwidths corresponding to the SSB are different. For example, Table 1 shows an example of the transmission bandwidths corresponding to the SSB at several different subcarrier spacings.

**Table 1**

| | | | | |
|---|---|---|---|---|
| SCS/kHz | 15 | 30 | 120 | 240 |
| SSB transmission bandwidth/MHz | 3.6 | 7.2 | 28.8 | 57.6 |

a2. Necessary system information (system information, SI): In this application, the necessary SI may be understood as minimum system information to be obtained by the terminal device before the terminal device initiates random access to the network device. For example, in an NR system, the terminal device may determine, by using control information in a PBCH, control information for scheduling a system information block type 1 (system information block type 1, SIB 1), and then determine the SIB 1 by using the control information for scheduling the SIB 1 (referred to as SIB 1 control information for short below). The SIB 1 includes necessary information, for example, a random access preamble (preamble), required for the terminal device to initiate random access to the network device. For ease of description, in this application, the necessary system information may be represented by the SIB 1.

According to the foregoing descriptions, because the terminal device may separately receive the SSB and the SIB 1 at different moments, a maximum value of a transmission bandwidth corresponding to the SSB and a transmission bandwidth corresponding to the SIB 1 may be used as the minimum bandwidth required for accessing the NR system. Further, if the terminal device obtains the SIB 1, the terminal device needs to first read the SIB 1 control information, and then determine the SIB 1 based on the SIB 1 control information. In this case, the transmission bandwidth corresponding to the SIB 1 may be represented by a transmission bandwidth corresponding to the SIB 1 control information or the transmission bandwidth corresponding to the SIB 1. For example, the SIB1 control information is carried on a physical downlink control channel (physical downlink control channel, PDCCH), and the SIB 1 is carried on a physical downlink shared channel (physical downlink shared channel, PDSCH). In this case, the transmission bandwidth corresponding to the SIB 1 may be represented by a transmission bandwidth corresponding to the PDCCH carrying the SIB1 control information or a transmission bandwidth corresponding to the PDSCH carrying the SIB 1. Further, optionally, if there are a plurality of transmission bandwidths corresponding to the SIB 1, a maximum value of a minimum transmission bandwidth corresponding to the SIB 1 and the transmission bandwidth corresponding to the SSB may be used as the minimum bandwidth required for accessing the NR system. For example, when a subcarrier spacing corresponding to the SSB and a subcarrier spacing corresponding to the PDCCH including the SIB1 control information are both 15 kHz, the transmission bandwidth corresponding to the SIB1 control information may be 24 RBs, 48 RBs, or 96 RBs. Herein, to determine the minimum bandwidth required for accessing the NR system, 24 RBs (4.32 MHz) may be used as the minimum transmission bandwidth corresponding to the SIB 1. Considering that the transmission bandwidth corresponding to the SSB is 20 RBs (3.6 MHz), the minimum bandwidth required for accessing the NR system may be understood as 4.32 MHz. For another example, when a subcarrier spacing corresponding to the SSB is 30 kHz and a subcarrier spacing corresponding to the PDCCH including the SIB1 control information is 15 kHz, the transmission bandwidth corresponding to the SIB1 control information may be 48 RBs or 96 RBs. Similarly, to determine the minimum bandwidth required for accessing the NR system, 48 RBs (8.64 MHz) may be used as the minimum transmission bandwidth corresponding to the SIB 1. Considering that the transmission bandwidth corresponding to the SSB is 20 RBs (7.2 MHz), the minimum bandwidth required for accessing the NR system may be understood as 8.64 MHz. In addition, if influence of the guard bandwidth is considered, in the foregoing two examples, the minimum bandwidths required for accessing the NR system may be 5 MHz and 10 MHz respectively. Correspondingly, terminal devices with bandwidth capabilities of 5 MHz and 10 MHz may be considered as terminal devices with a low bandwidth capability in the foregoing two examples.

It should be noted that the SIB1 control information may alternatively be carried on another physical layer channel, for example, an enhanced physical downlink control channel (enhanced physical downlink control channel, EPDCCH). The SIB 1 may alternatively be carried on another physical layer channel. This is not specifically limited in this application.

Second understanding: Whether a terminal device is a terminal device with a low bandwidth capability is determined based on a relationship between a sum of transmission bandwidths of bandwidth parts (bandwidth parts, BWPs) configured for the terminal device and the system bandwidth.

Specifically, for a terminal device, on one carrier, it is assumed that the network device configures a maximum quantity of BWPs for the terminal device at a time, and a transmission bandwidth corresponding to each configured BWP is equal to a bandwidth capability of the terminal device. In this case, if a sum of transmission bandwidths corresponding to all configured BWPs is still less than the system bandwidth, such a terminal device in this application may also be understood as a terminal device with a low bandwidth capability. Optionally, in this case, a frequency resource corresponding to each BWP in all the configured BWPs does not overlap a frequency resource corresponding to another BWP in all the configured BWPs. Assuming that a system bandwidth corresponding to one carrier is 50 MHz, a bandwidth capability of a terminal device is 5 MHz or 10 MHz, and the network device may configure four BWPs for the terminal device at a time on the carrier, a total transmission bandwidth corresponding to the BWPs configured for the terminal device at a time on the carrier is 20 MHz. Because 20 MHz is less than 50 MHz, the terminal device may also be considered as a terminal device with a low bandwidth capability.

Third understanding: Whether a terminal device is a terminal device with a low bandwidth capability is determined based on a relationship between a frequency range of dynamic transmission performed by the terminal device and the system bandwidth.

Specifically, for a terminal device, on a carrier, if a frequency resource range that can be used for dynamic transmission when the terminal device performs data transmission with the network device is less than a specific threshold, the terminal device may be considered as a terminal device with a low bandwidth capability in this application. The specific threshold may be equal to a system bandwidth corresponding to the carrier, or is equal to X times the system bandwidth corresponding to the carrier. X is a decimal or a fraction greater than 0 and smaller than or equal to 1. It should be noted that the dynamic transmission herein may include the following understandings:
b1. Data transmission implemented by using physical layer signaling may be considered as dynamic transmission. The physical layer signaling herein includes signaling transmitted through a physical layer downlink control channel such as a PDCCH and an EPDCCH. The data transmission includes uplink data transmission and/or downlink data transmission, and data may include information and/or a signal, and the like. It should be noted that the downlink control channel in the embodiments of this application may alternatively be an NR-PDCCH, or another channel that is newly defined in a future communication protocol and that similarly functions as the downlink control channel. A type and a name of the downlink control channel are not limited in the embodiments of this application, and all downlink control channels are collectively referred to as PDCCHs. The PDCCH carries downlink control information (downlink control information, DCI), and the DCI may include resource allocation information and/or other control information of one or more terminal devices.
b2. If a frequency resource corresponding to data (including data received from the network device and/or data sent to the network device) transmitted by the terminal device falls within a preconfigured frequency resource range, the data transmission may be understood as the dynamic transmission. For example, the network device may preconfigure, by using radio resource control (radio resource control, RRC) signaling, a frequency resource range (for example, a frequency range corresponding to a BWP configured by using RRC signaling in NR) for data transmission, all data transmission performed within the frequency resource range may be considered as the dynamic transmission. On the other hand, if data transmission between the terminal device and the network device needs to be performed outside the preconfigured frequency resource range, the network device first needs to reconfigure a frequency resource range (for example, reconfigure a BWP) for data transmission for the terminal device by using RRC signaling, and then after the terminal device correctly receives the reconfiguration information, data transmission between the terminal device and the network device can only be performed within the reconfigured frequency resource range. Because RRC reconfiguration is required in this process, a long delay is required. Therefore, data transmission whose corresponding frequency resource is outside the preconfigured frequency resource range for data transmission is not considered as the dynamic transmission.

It should be noted that a terminal device with a low bandwidth capability may alternatively be defined in another manner, which is not specifically limited. For example, if a bandwidth capability of a terminal device is less than a threshold (for example, Y MHz, where Y is a number greater than zero), the terminal device may be considered as a terminal device with a low bandwidth capability.

It should be noted that, in this application, for ease of description, the transmission bandwidth or the data transmission bandwidth may include a guard bandwidth, although the guard bandwidth is not used for data transmission. For example, when a bandwidth capability of a terminal device is described, if a transmission bandwidth of the terminal device is 5 MHz (or the bandwidth capability of the terminal device is 5 MHz), 5 MHz may include the guard bandwidth. However, when the network device performs data transmission with the terminal device, an actual maximum available data transmission bandwidth is less than 5 MHz.

It should be noted that, in this application, for a terminal device that supports carrier aggregation (carrier aggregation, CA), provided that the terminal device has the foregoing feature on one of carriers, the terminal device may be understood as a terminal device with a low bandwidth capability.

(4) In descriptions of the embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

(5) "At least one" in this application refers to "one or more". "A plurality of' means "two or more".

(6) In descriptions of this application, words such as "first" and "second" are merely intended for purposes of description, and should not be understood as indicating or implying relative importance or a sequence.

To describe the technical solutions in the embodiments of this application more clearly, the following describes in detail the SRS transmission method and apparatus provided in the embodiments of this application with reference to the accompanying drawings.

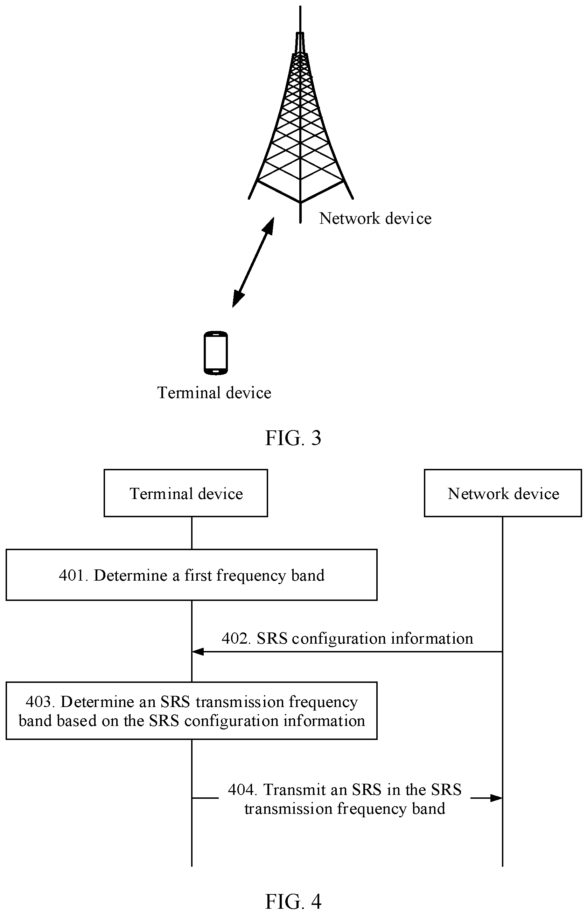

FIG. 3 shows a possible architecture of a communication system to which the SRS transmission method provided in the embodiments of this application is applicable. The architecture of the communication system includes a network device and a terminal device.

The network device is a device having a radio transceiver function, a node in a radio access network (radio access network, RAN), or a chip that may be disposed in the network device. The network device includes but is not limited to: a next generation NodeB (next generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, a home NodeB, HNB, or a femto), a picocell (pico), a baseband unit (baseband unit, BBU), an access point (access point, AP) in a wireless fidelity (wireless fidelity, Wi-Fi) system, a wireless relay node (relay), a wireless backhaul node, or a transmission point (a transmission reception point, TRP, or a transmission point, TP), or may be a network node that constitutes a gNB or a transmission point, for example, a baseband unit (BBU) or a distributed unit (distributed unit, DU).

In some deployments, the gNB may include a centralized unit (centralized unit, CU) and a DU. The gNB may further include a radio unit (radio unit, RU). The CU implements a part of functions of the gNB, and the DU implements a part of functions of the gNB. For example, the CU implements functions of a radio resource control (radio resource control, RRC) layer and a packet data convergence protocol (packet data convergence protocol, PDCP) layer, while the DU implements functions of a radio link control (radio link control, RLC) layer, a media access control (media access control, MAC) layer, and a physical (physical, PHY) layer. Information at the RRC layer finally becomes information at the PHY layer or is transformed from information at the PHY layer. Therefore, in such an architecture, it may be considered that higher layer signaling such as RRC layer signaling or PHCP layer signaling is sent by the DU or is sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in the embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a radio relay node, or the like. Application scenarios are not limited in the embodiments of this application. The terminal device having a wireless transceiver function and a chip that may be disposed in the terminal device are collectively referred to as terminal devices in this application.

Data is transmitted between the network device and the terminal device through an air interface (air interface).

The terminal device in the solutions of this application may be understood as a terminal device with a low bandwidth capability.

It should be noted that the communication system shown in FIG. 3 may be a wireless communication system, and may be but is not limited to a 4.5G or 5G wireless communication system, a further evolved system based on long term evolution (long term evolution, LTE) or NR, and various future communication systems, for example, a 6G system or another communication network.

An embodiment of this application provides an SRS transmission method, applicable to the communication system shown in FIG. 3. Referring to FIG. 4, a specific procedure of the method includes the following steps.

Step 401: A terminal device determines a first frequency band, where a bandwidth of the first frequency band is greater than a maximum channel bandwidth supported by the terminal device.

Specifically, the first frequency band is used to transmit an SRS. Certainly, in addition, the first frequency band may be used by the terminal device and a network device to transmit uplink data and/or downlink data. In other words, the first frequency band may be further used to transmit other data, for example, PDCCH data. This is not limited in this application.

For example, the first frequency band may include continuous frequency resources in frequency domain on one carrier, for example, include continuous subcarriers, resource elements (resource elements, REs), and RBs.

In an actual application, the bandwidth of the first frequency band is smaller than or equal to a carrier bandwidth. It may be understood that the carrier bandwidth herein may be understood as a carrier bandwidth configured by the network device for the terminal device, and the configured carrier bandwidth may be equal to or less than a system bandwidth on the network device side. For example, the system bandwidth on the network device side is 100 MHz, and the carrier bandwidth configured for the terminal device may be 20 MHz, 40 MHz, or another value less than or equal to 100 MHz.

In an optional implementation, there may be at least the following two manners for the terminal device to determine the first frequency band:
Manner c1: The terminal device receives first information from the network device, where the first information is used to indicate the first frequency band; and the terminal device determines the first frequency band based on the first information.

Specifically, the first information may be first frequency band information. The first frequency band information may include information corresponding to the first frequency band, for example, the bandwidth of the first frequency band, a frequency domain location of the first frequency band on a carrier on which the first frequency band is located, an SCS configuration and a cyclic prefix (cyclic prefix, CP) configuration used when the terminal device transmits data in the first frequency band, configuration information used when data of a control channel (for example, the control channel may include but is not limited to a PDCCH, an EPDCCH, and a physical uplink control channel (physical uplink control channel, PUCCH)) is transmitted by using the first frequency band, and configuration information used when data of a shared channel (for example, the shared channel may include but is not limited to a PDSCH, and a physical uplink shared channel (physical uplink shared channel, PUSCH)) is transmitted by using the first frequency band.

Manner c2: The first frequency band is predefined.

Specifically, in Manner c1, the first information may be RRC signaling, media access control (media access control, MAC) signaling, physical layer signaling, or the like that is sent by the network device, or may be other signaling sent by the network device, for example, a combination of the foregoing signaling. Certainly, the first information may alternatively be sent by using the foregoing signaling, that is, the first information is included in the foregoing signaling. This is not limited in this application. It should be noted that the signaling may also be understood as a message, information, or the like.

In a specific implementation, the network device may configure one or more first frequency bands for the terminal device. Each first frequency band may be independently configured, or the first frequency bands may be jointly configured. In other words, some or all of first frequency band information corresponding to the plurality of first frequency bands is the same. In addition, when the network device configures a plurality of first frequency bands for the terminal device, frequency domain resources corresponding to different first frequency bands may overlap, or may not overlap. This is not specifically limited in this application. The terminal device may select the first frequency band from the one or more configured first frequency bands.

In an implementation, in an NR system, the first frequency band may be a bandwidth part (bandwidth part, BWP). For example, the network device may configure a plurality of BWPs for the terminal device by using RRC signaling, and then indicate an activated BWP in the plurality of BWPs by using physical layer signaling. Then, data transmission between the network device and the terminal device is performed in the activated BWP. For another example, the network device may configure an activated BWP for the terminal device only by using RRC signaling, and then data transmission between the terminal device and the network device is performed in the activated BWP. It should be noted that, in this application, an activated BWP and a configured but not activated BWP may differ in at least one of the following three points:
d1. In the configured but not activated BWP, the terminal device does not expect to receive downlink channel data and/or a downlink signal, for example, PDSCH data, PDCCH data, or a channel state information reference signal (channel state information reference signal, CSI-RS). If the CSI-RS is used for radio resource management (radio resource management, RRM), the terminal device may perform RRM measurement in the configured but not activated BWP by using the CSI-RS.
d2. In the configured but not activated BWP, the terminal device does not expect to send uplink channel data and/or an uplink signal, for example, PUSCH data, PUCCH data, and an SRS.
d3. In the activated BWP, the terminal device performs data transmission with the network device on a frequency resource included in the activated BWP. In the activated BWP except the foregoing frequency resource for data transmission, in another frequency resource range, behavior of the terminal device may be the same as behavior of the terminal device in the configured but not activated BWP, that is, d1 and d2 are satisfied.

In an example manner, the terminal device may correspond to different frequency bands in different slots (that is, time units). For example, when the terminal device transmits SRSs in different OFDM symbols included in one slot, a corresponding frequency band configuration may not be greater than the maximum channel bandwidth supported by the terminal device, and when the terminal device transmits SRSs in OFDM symbols included in different slots, a corresponding frequency band may be greater than a frequency band of the maximum channel bandwidth supported by the terminal device. Herein, the corresponding frequency band used to transmit SRSs in OFDM symbols included in different slots may be understood as the first frequency band. The corresponding frequency band used to transmit SRSs in different OFDM symbols included in one slot may be understood as a frequency band, for example, a BWP, including an SRS frequency hopping band. In this way, SRS transmission efficiency can be ensured. For the terminal device, if a range of frequencies at which SRSs are transmitted for two times exceeds the maximum channel bandwidth supported by the terminal device, the terminal device needs to first adjust a radio frequency (radio frequency, RF) filter before transmitting the SRSs. Adjustment of the RF filter requires a specific delay, which is generally one to two OFDM symbols. Therefore, if the SRSs transmitted for two times are distributed in two continuous OFDM symbols, and a corresponding frequency band is greater than the maximum channel bandwidth supported by the terminal device, the terminal device cannot ensure transmission of one of the SRSs. Therefore, SRSs transmitted by the terminal device in different slots may correspond to different frequency bands.

Based on the foregoing description, in an optional implementation, the terminal device determines the first frequency band when determining to transmit SRSs in OFDM symbols included in different slots. That the terminal device determines the first frequency band when determining to transmit SRSs in OFDM symbols included in different slots may be understood as: When the terminal device determines to transmit the SRSs in the OFDM symbols included in the different slots, the terminal device may determine that frequency bands including the SRS transmission frequency band in different slots are first frequency bands greater than the maximum channel bandwidth supported by the terminal device.

Specifically, the terminal device may obtain a first frequency band set, where the first frequency band set may include a frequency band greater than the maximum channel bandwidth supported by the terminal device, or the first frequency band set includes a frequency band smaller than or equal to the maximum channel bandwidth supported by the terminal device and a frequency band greater than the maximum channel bandwidth supported by the terminal device. Further, a specific method used by the terminal device to determine the first frequency band may be: The terminal device determines the first frequency band based on the first frequency band set.

The first frequency band set may include a second frequency band set, or the first frequency band set may include a second frequency band set and a third frequency band set. The second frequency band set includes a frequency band greater than the maximum channel bandwidth supported by the terminal device, or the second frequency band set includes a frequency band smaller than or equal to the maximum channel bandwidth supported by the terminal device and a frequency band greater than the maximum channel bandwidth supported by the terminal device. The third frequency band set is predefined. The third frequency band set includes a frequency band greater than the maximum channel bandwidth supported by the terminal device, or the second frequency band set includes a frequency band smaller than or equal to the maximum channel bandwidth supported by the terminal device and a frequency band greater than the maximum channel bandwidth supported by the terminal device.

The terminal device may obtain the second frequency band set from the network device by using one piece of signaling. To be specific, the network device may configure, for the terminal device by using one piece of signaling, a frequency band greater than the maximum channel bandwidth supported by the terminal device. Alternatively, the terminal device may obtain the second frequency band set from the network device by using two pieces of signaling. To be specific, the network device may configure, for the terminal device by using one piece of signaling, a frequency band greater than the maximum channel bandwidth supported by the terminal device, and configures, for the terminal device by using the other piece of signaling, a frequency band smaller than or equal to the maximum channel bandwidth supported by the terminal device.

It should be understood that, when the first frequency band set includes only the second frequency band set, the foregoing method for obtaining the second frequency band set is a method for obtaining the first frequency band set.

Step 402: The terminal device receives SRS configuration information from the network device, where the SRS configuration information is used to indicate an SRS transmission frequency band, and a bandwidth of the SRS transmission frequency band is smaller than or equal to the maximum channel bandwidth supported by the terminal device.

The SRS transmission frequency band is included in the first frequency band.

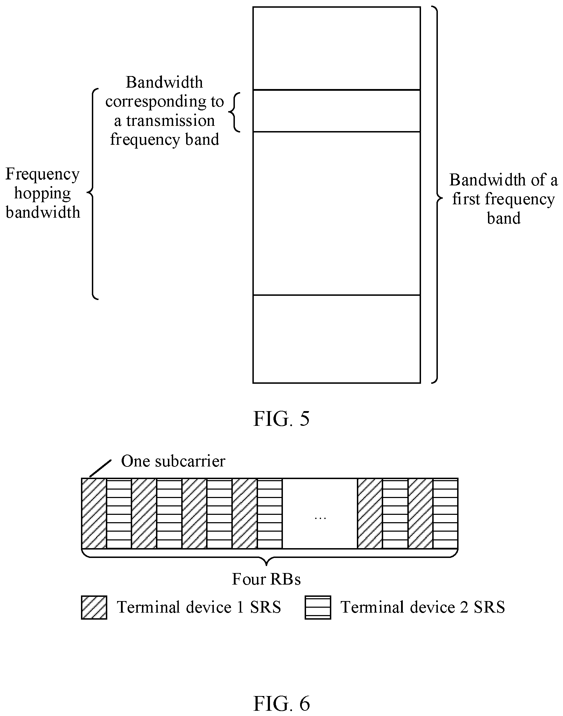

In an optional implementation, the SRS configuration information further includes an SRS frequency hopping bandwidth; the SRS frequency hopping bandwidth is greater than or equal to the bandwidth corresponding to the SRS transmission frequency band; and the bandwidth of the first frequency band is greater than the SRS frequency hopping bandwidth. For example, a relationship between the bandwidth of the first frequency band, the frequency hopping bandwidth, and the bandwidth corresponding to the transmission frequency band may be shown in FIG. 5.

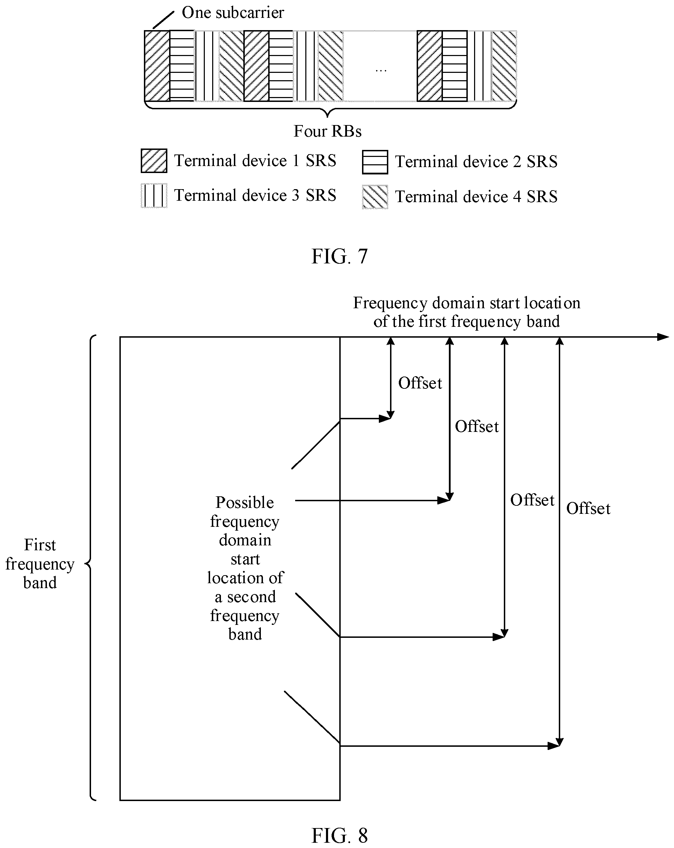

The bandwidth corresponding to the SRS transmission frequency band represents a transmission bandwidth used by the terminal device to transmit an SRS each time. It should be noted that different users may use a comb structure to transmit SRSs, to improve resource multiplexing efficiency. In this application, the bandwidth corresponding to the SRS transmission frequency band may be represented by a bandwidth corresponding to a frequency resource actually used by the terminal device to transmit an SRS, or may be represented by a bandwidth corresponding to a frequency resource of an SRS comb structure, as shown in FIG. 6 or FIG. 7 for example. In FIG. 6, assuming that two terminal devices use a comb structure to implement frequency multiplexing in SRS transmission, an SRS transmission bandwidth of each terminal device may be represented by four RBs or two RBs. In FIG. 7, assuming that four terminal devices use a comb structure to implement frequency multiplexing in SRS transmission, an SRS transmission bandwidth of each terminal device may be represented by four RBs or one RB. It should be noted that, in FIG. 6, when the bandwidth corresponding to the SRS transmission frequency band is represented by two RBs, it only indicates that a quantity of subcarriers included in the SRS transmission bandwidth is the same as a quantity of subcarriers of the two RBs, because one RB generally includes subcarriers continuous in frequency domain. The bandwidth corresponding to the SRS transmission frequency band is represented by one RB in FIG. 7. Similarly, the bandwidth corresponding to the SRS transmission frequency band is represented by two RBs in FIG. 6. Details are not described herein.

For example, the SRS frequency hopping bandwidth may indicate a frequency range that can be measured when the terminal device transmits an SRS.

In an implementation, when the first frequency band is a BWP, the SRS frequency hopping bandwidth may dynamically change in an activated BWP.

It should be noted that, in this application, the SRS frequency hopping bandwidth may be predefined as being equal to the maximum channel bandwidth supported by the terminal device.

Step 403: The terminal device determines the SRS transmission frequency band based on the SRS configuration information.

Specifically, the SRS configuration information includes the bandwidth corresponding to the SRS transmission frequency band and some parameters related to the transmission frequency band. The terminal device may determine the transmission frequency band based on the bandwidth corresponding to the transmission frequency band and the some parameters related to the transmission frequency band.

Step 404: The terminal device transmits an SRS to the network device in the SRS transmission frequency band.

In an optional implementation, the terminal device further receives second information from the network device, where the second information is used to indicate a second frequency band; and the terminal device determines the second frequency band based on the second information, where the second frequency band is included in the first frequency band, and a bandwidth of the second frequency band is smaller than or equal to the maximum channel bandwidth supported by the terminal device.

For example, the second frequency band may include continuous frequency resources in frequency domain on one carrier, for example, include continuous subcarriers, REs, and RBs.

Specifically, the second information may be RRC signaling, MAC signaling, physical layer signaling, or the like that is sent by the network device, or may be other signaling sent by the network device, for example, a combination of the foregoing signaling. Certainly, the second information may alternatively be sent by using the foregoing signaling, that is, the second information is included in the foregoing signaling. This is not limited in this application.

In an example, the second information may include at least a frequency domain resource location corresponding to the second frequency band; and the frequency domain resource location corresponding to the second frequency band may be a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

Specifically, the offset of the second frequency band relative to the frequency domain start location of the first frequency band in the first frequency band may be an offset between the frequency domain start location of the first frequency band and the frequency domain start location of the second frequency band. For example, the offset between the frequency domain start location of the first frequency band and that of the second frequency band may be shown in FIG. 8. In this implementation, the network device may directly indicate the offset by using downlink control information (downlink control information, DCI) included in a physical layer control channel.

Similarly, the frequency domain resource location corresponding to the second frequency band is the offset of the second frequency band relative to the frequency domain end location of the first frequency band in the first frequency band, and may be an offset between the frequency domain end location of the first frequency band and the frequency domain end location of the second frequency band. Other descriptions are similar to the descriptions of the offset of the second frequency band relative to the frequency domain start location of the first frequency band in the first frequency band, and reference may be made to each other. Details are not described herein again.

In another example, the second information may include a first index, and the first index corresponds to the second frequency band in the first frequency band. A specific method used by the terminal device to determine the second frequency band based on the second information may be: The terminal device determines the second frequency band based on the first index and a correspondence between the first index and the second frequency band.

Specifically, the network device may preconfigure a specific location of the second frequency band in frequency domain by using higher layer signaling such as RRC signaling, and then indicate, with reference to physical layer signaling, an effective second frequency band. Herein, the effective second frequency band may be understood similarly as the foregoing activated BWP. That is, data transmission between the network device and the terminal device can be performed only in the effective second frequency band. Specially, data transmission for RRM measurement, for example, transmission of a reference signal, may alternatively be performed in an ineffective second frequency band. For example, when configuring the first frequency band, the network device may configure, at a time, second frequency bands included in the first frequency band, and then indicate a specific effective second frequency band with reference to the physical layer signaling. For example, the first frequency band configured by the network device includes four second frequency bands, and each second frequency band corresponds to a unique index (that is, the first index herein). The network device may indicate, by using two bits, a specific effective second frequency band. For example, 00 corresponds to a 1^{st} second frequency band, 01 corresponds to a 2^{nd} second frequency band, 10 corresponds to a 3^{rd} second frequency band, and 11 corresponds to a 4^{th} second frequency band. In this case, there is a correspondence between the first index and the second frequency band.

In another optional implementation, the terminal device may determine the second frequency band based on at least one of the following parameters: a time location at which the terminal device transmits an SRS, a quantity of SRS transmissions, the SRS frequency hopping bandwidth, an SRS transmission bandwidth, and information related to the first frequency band. The information related to the first frequency band is an index of the first frequency band or a frequency domain resource location corresponding to the first frequency band. The second frequency band is included in the first frequency band, and a bandwidth of the second frequency band is smaller than or equal to the maximum channel bandwidth supported by the terminal device.

Specifically, the foregoing information (parameters) is described in detail:
(1) Time location at which the terminal device transmits an SRS: The time location at which the terminal device transmits an SRS may be represented by a slot (slot) index, an OFDM symbol index, an odd slot index, an even time sequence index, or the like, or may be other time-related information. This is not specifically limited in this application. The slot index may be an absolute index, or may be a relative index within a time range. For example, the slot index may be an absolute index within 10 ms. For example, duration of one slot is 0.5 ms, and 20 slots in total are included in 10 ms. In this case, 20 corresponding slot indexes range from, for example, slot 0 to slot 19. Within another 10 ms, slot indexes corresponding to 20 slots also range from slot 0 to slot 19. Optionally, it is assumed that four second frequency bands are included in the first frequency band, and slot indexes are represented by relative indexes. SRS transmission performed between the network device and the terminal device in slot 0 to slot 4, slot 5 to slot 9, slot 10 to slot 14, and slot 15 to slot 19 may respectively correspond to a 1^{st} second frequency band, a 2^{nd} second frequency band, a 3^{rd} second frequency band, and a 4^{th} second frequency band. Alternatively, SRS transmission performed between the network device and the terminal device in slot (4^{∗}m+n-1) may correspond to an nth second frequency band. In this example, a value of n is 1, 2, 3, or 4, and a value of m is 0, 1, 2, 3, or 4. The correspondence between the second frequency band and the time location of the second frequency band may alternatively have another form of expression. This is not specifically limited in this application.
(2) Quantity of SRS transmissions: A specific effective second frequency band in second frequency bands included in the first frequency band may be related to a quantity of times of sending an SRS in a second frequency band. For example, when a quantity of times of sending an SRS in a second frequency band reaches a threshold, the terminal device may send the SRS in another second frequency band. The threshold herein may alternatively be preconfigured or predefined, or may be determined based on another parameter. It is assumed that the first frequency band includes four second frequency bands that are respectively represented by a second frequency band 1, a second frequency band 2, a second frequency band 3, and a second frequency band 4. If the threshold is preconfigured as 3, when the terminal device transmits an SRS in each second frequency band for three times, the terminal device may transmit the SRS in another second frequency band. Optionally, the threshold may be further related to the SRS transmission bandwidth and the SRS frequency hopping bandwidth. If the SRS transmitted by the terminal device in a second frequency band has traversed the SRS frequency hopping bandwidth, the terminal device may transmit the SRS in another second frequency band. Further, optionally, the threshold may be equal to a ratio of the SRS frequency hopping bandwidth to the SRS transmission bandwidth. For example, if the SRS frequency hopping bandwidth is configured as 10 MHz, and a corresponding transmission bandwidth used by the terminal device to transmit the SRS is 5 MHz, the threshold may be equal to 2, because the network device can obtain channel state information within 10 MHz after the terminal device performs two SRS transmission.

It should be noted that, at least one parameter described above may be understood as having a correspondence with a specific location of the second frequency band. The correspondence may be specified in a protocol, preconfigured, or configured by using RRC signaling, or may be indicated by using another signaling form, for example, MAC signaling or physical layer signaling. This is not specifically limited in this application.

In still another optional implementation, the second frequency band may be predefined (or specified in a protocol). For example, it may be predefined that the bandwidth of the second frequency band is the same as the maximum channel bandwidth supported by the terminal device. In this case, if the maximum channel bandwidth supported by the terminal device is Y MHz, it may be considered that the bandwidth of the second frequency band is also Y MHz. Y is a number greater than zero.

It should be noted that, when only the second frequency band is used in a communication system and no SRS frequency hopping band (that is, a frequency band corresponding to the SRS frequency hopping bandwidth) is used in the communication system, the second frequency band may be used as the SRS frequency hopping band. In this case, the terminal device transmits an SRS to the network device in the transmission frequency band included in the second frequency band.

In an optional implementation, when the second frequency band and the SRS frequency hopping band are used in a communication system, the bandwidth of the second frequency band is greater than or equal to the SRS frequency hopping bandwidth. In this case, the terminal device transmits an SRS to the network device in the transmission frequency band included in the SRS frequency hopping band.

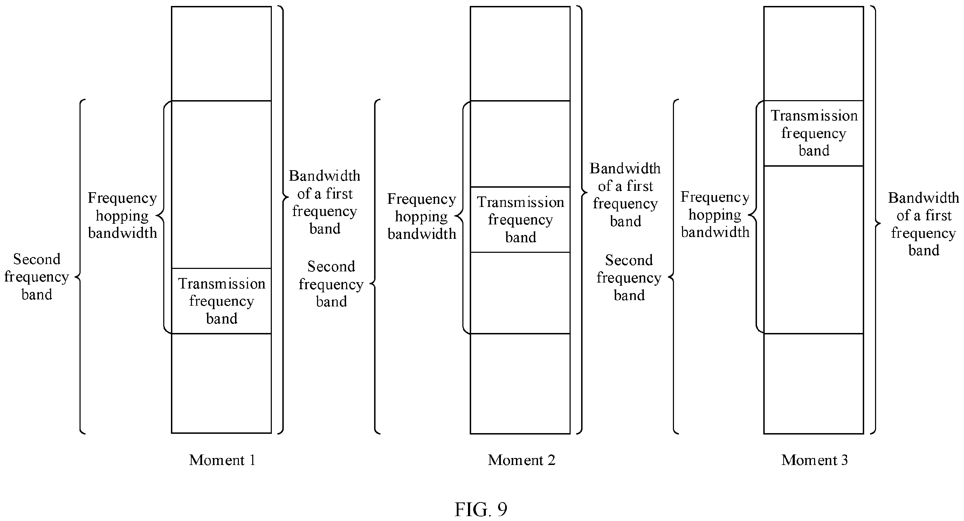

For example, a frequency range that can be measured when the terminal device transmits an SRS in the second frequency band may be understood as the SRS frequency hopping bandwidth. A frequency resource location corresponding to the SRS frequency hopping bandwidth (that is, a location of the SRS frequency hopping band) may be preconfigured, or may be notified by the network device by using signaling. A specific signaling form may be RRC signaling, MAC signaling, physical layer signaling, or another signaling form. This is not specifically limited. Assuming that the bandwidth of the second frequency band is 10 MHz, and the SRS frequency hopping bandwidth configured by the network device for the terminal device is 2.5 MHz, for the terminal device, the second frequency band may include four SRS frequency hopping bandwidths. However, because the SRS frequency hopping bandwidth configured for the terminal device is only 2.5 MHz, the terminal device can implement SRS transmission only in 2.5 MHz. Further, if the bandwidth corresponding to the SRS transmission frequency band configured for the terminal device is 1.25 MHz, the terminal device may perform two frequency hopping transmissions to implement SRS transmission in 2.5 MHz. In this case, the network device obtains uplink channel state information between the network device and the terminal device in 2.5 MHz. For a system having a channel reciprocity feature, the uplink channel state information may be equivalent to downlink channel state information. For example, FIG. 9 shows a relationship between the first frequency band, the second frequency band, a frequency hopping bandwidth, and a transmission frequency band. It should be noted that, as shown in FIG. 9, it may be understood that three SRS frequency hopping transmissions are performed. Besides, in addition to MHz, the bandwidth corresponding to the SRS transmission frequency band and the SRS frequency hopping bandwidth may alternatively be represented by a quantity of RBs or a quantity of subcarriers, or may be represented in another form. This is not specifically limited in this application.

In an example implementation, in different time units, the second frequency band may change in the first frequency band, and the terminal device may implement SRS transmission in the frequency hopping band in the second frequency band in a frequency hopping manner. When the second frequency band changes, the terminal device may transmit an SRS in a changed second frequency band in the following transmission manner (for ease of description, the second frequency band before the change is referred to as a second frequency band A, and the second frequency band after the change is referred to as a second frequency band B):
Manner e1: The terminal device determines an SRS transmission location in the second frequency band B based on an SRS transmission location in the second frequency band A. It is assumed that the terminal device has a total of four different SRS transmission locations in the second frequency band A, and SRS transmission bandwidths corresponding to the SRS transmission locations do not overlap each other in frequency (for example, in FIG. 9, it may be considered that the terminal device has three different SRS transmission locations in the second frequency band). In this case, if the last SRS transmission performed by the terminal device in the second frequency band A corresponds to a second SRS transmission location (which is, for example, a location of a transmission frequency band shown in the middle figure in FIG. 9), when the terminal device performs the first SRS transmission in the second frequency band B, a corresponding SRS transmission location may correspond to a third SRS transmission location (which is, for example, a location of a transmission frequency band shown in the right figure in FIG. 9) in the second frequency band B. If quantities of SRS transmission locations included in the second frequency band A and the second frequency band B are different, for example, the quantity of SRS transmission locations included in the second frequency band B is less than the quantity of SRS transmission locations included in the second frequency band A, when the second frequency band A changes to the second frequency band B, when determining the SRS transmission location, the terminal device may perform a modulo operation on the quantity of SRS transmission locations included in the second frequency band B.
Manner e2. The terminal device transmits an SRS in the second frequency band B based only on an SRS transmission location in the second frequency band B. For example, when the effective second frequency band changes from the second frequency band A to the second frequency band B, the terminal device transmits an SRS in the second frequency band B based on a first SRS transmission location, a second SRS transmission location, ..., and an N^{th} SRS transmission location. N is a quantity of SRS transmission locations included in the second frequency band B.

Further, in different time units, the first frequency band may change. If the first frequency band in which the second frequency band is located changes, (for ease of description, the first frequency band before the change is referred to as a first frequency band A, and the first frequency band after the change is referred to as a first frequency band B), to simplify implementation of the terminal device, the terminal device may directly transmit an SRS in the first frequency band B based on a transmission manner of the SRS in the first frequency band B.

It should be noted that, in this application, frequency locations corresponding to SRS transmission in different time units may be related to a quantity of SRS frequency hopping times (or a quantity of SRS transmissions). In this application, to simplify implementation of the terminal device, when the first frequency band changes, the quantity of SRS transmission performed by the terminal device may be cleared, that is, the quantity of SRS transmissions is recounted in the first frequency band after the change. When the first frequency band does not change, but the second frequency band changes, the quantity of SRS transmissions performed the terminal device may be cleared, or may not be cleared. This is not specifically limited in this application.

It should be noted that, in this application, the time unit may be represented by using an integer quantity of OFDM symbols, an integer quantity of subframes (subframes), an integer quantity of transmission time intervals (transmission time intervals, TTIs), an integer quantity of microseconds, or an integer quantity of milliseconds, or may be represented in another form such as a slot. This is not specifically limited in this application.

It should be noted that when the bandwidth of the second frequency band is equal to the maximum channel bandwidth supported by the terminal device, because the terminal device transmits an SRS in the second frequency band, after determining the bandwidth of the second frequency band, the terminal device may match an RF filter of the terminal device with the second frequency band, and a receive frequency of the RF filter does not need to be frequently adjusted based on the SRS frequency hopping bandwidth, so that implementation of the terminal device can be simplified.

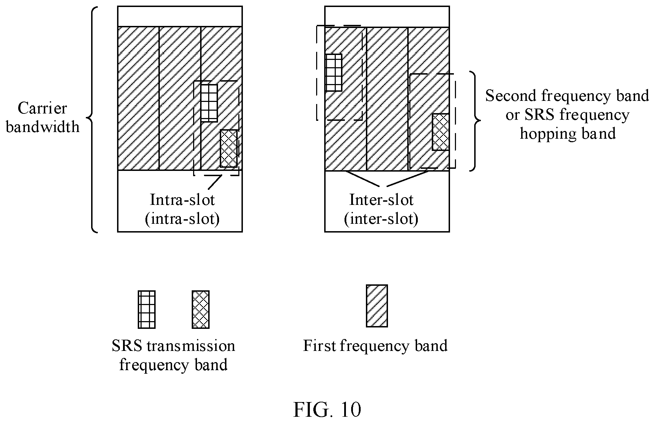

In a specific implementation, when the terminal device transmits SRSs in different OFDM symbols included in one slot (that is, a time unit), corresponding second frequency bands or SRS frequency hopping bands may be the same. However, when the terminal device transmits SRSs in OFDM symbols included in different slots, corresponding second frequency bands or SRS frequency hopping bands may be different, as shown in FIG. 10.

According to the SRS transmission method provided in this embodiment of this application, the terminal device determines the first frequency band, and receives the SRS configuration information from the network device, where the SRS configuration information is used to indicate the SRS transmission frequency band; the terminal device determines the SRS transmission frequency band based on the SRS configuration information, where the SRS transmission frequency band is included in the first frequency band; and the terminal device transmits the SRS to the network device in the SRS transmission frequency band, where the bandwidth of the first frequency band is greater than the maximum channel bandwidth supported by the terminal device. According to the foregoing method, the terminal device can transmit an SRS within a larger frequency resource range, or a bandwidth corresponding to a transmission frequency band of the SRS is more suitable for a terminal device with a low bandwidth capability. Therefore, it is ensured that more reference information, for example, channel state information within a larger frequency range, can be provided through SRS measurement for data transmission between the network device and the terminal device, so that the network device can allocate a frequency resource suitable for the terminal device within the larger frequency range, thereby improving data transmission efficiency.

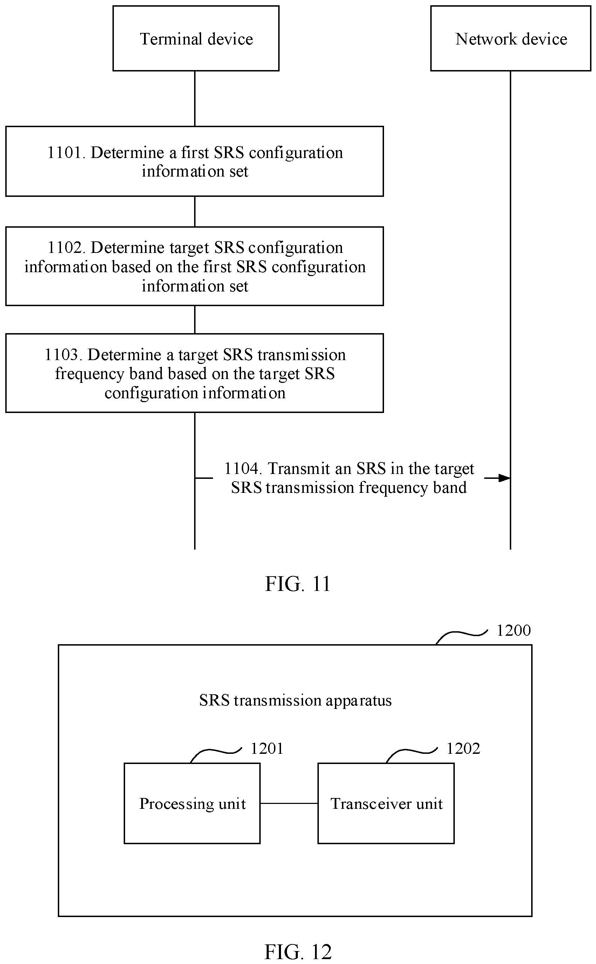

An embodiment of this application further provides another SRS transmission method, applicable to the communication system shown in FIG. 3. Referring to FIG. 11, a specific procedure of the method may include the following steps.

Step 1101: A terminal device determines a first SRS configuration information set, where the first SRS configuration information set includes at least two pieces of SRS configuration information.

An SRS configuration information set may be represented in a form of a table, or may be represented in another form. This is not limited in this application.

In an optional implementation, the terminal device may determine the first SRS configuration information set in the following two specific methods:
Method f1: The terminal device determines the first SRS configuration information set in at least one SRS configuration information set based on a maximum channel bandwidth supported by the terminal device.

Specifically, the at least one SRS configuration information set may include an SRS configuration information set corresponding to a terminal device with a low bandwidth capability and an SRS configuration information set corresponding to a terminal device with a non-low bandwidth capability.

Method f2: The terminal device receives third information from a network device, where the third information is used to indicate the first SRS configuration information set to be used by the terminal device, and the terminal device determines the first SRS configuration information set based on the third information.

Specifically, the third information may be signaling sent by the network device, or may be information such as indication information included in signaling. When a terminal device with a low bandwidth capability and a terminal device with a non-low bandwidth capability multiplex an SRS transmission resource, for example, in a comb manner, to ensure multiplex transmission efficiency, it needs to be ensured that the terminal devices with different capabilities have a same understanding on the SRS configuration information set. In this case, the terminal device determines a used SRS configuration information set through signaling indication. Therefore, SRS multiplex transmission efficiency can be flexibly ensured, and an optimized design for the terminal device with a low bandwidth capability can be ensured, thereby ensuring data transmission efficiency. It should be noted that, in the embodiments of this application, the terminal device with a non-low bandwidth capability may be understood as a legacy terminal device or a backward-compatible terminal device. For example, the legacy terminal device or the backward-compatible terminal device may be a terminal device of NR release (release) 15 or NR release 16. Correspondingly, an SRS configuration information set of the terminal device with a non-low bandwidth capability may be understood as a legacy SRS configuration information set or a backward-compatible configuration information set. For example, the legacy SRS configuration information set or the backward-compatible SRS configuration information set may be an SRS configuration information set configured by the network device for a terminal device of NR release (release) 15 or NR release 16.

Step 1102: The terminal device determines target SRS configuration information based on the first SRS configuration information set, where the target SRS configuration information is used to indicate a target SRS transmission frequency band.

In an optional implementation, the target SRS configuration information may include a target SRS frequency hopping bandwidth.

For example, Table 2 is a specific implementation of the first SRS configuration information set.

**Table 2**

| Configuration | Frequency hopping bandwidth 1 | Frequency hopping parameter 1 | Frequency hopping bandwidth 2 | Frequency hopping parameter 2 | Frequency hopping bandwidth 3 | Frequency hopping parameter 3 | Frequency hopping bandwidth 4 | Frequency hopping parameter 4 |
|---|---|---|---|---|---|---|---|---|
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 6' | 24 | 1 | 8 | 3 | 4 | 2 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 9' | 32 | 1 | 8 | 4 | 4 | 2 | 4 | 1 |
| 10 | 36 | 1 | 12 | 3 | 4 | 3 | 4 | 1 |
| 10' | 36 | 1 | 4 | 9 | 4 | 1 | 4 | 1 |
| 11 | 40 | 1 | 20 | 2 | 4 | 5 | 4 | 1 |
| 11' | 40 | 1 | 4 | 10 | 4 | 1 | 4 | 1 |
| 12 | 48 | 1 | 16 | 3 | 8 | 2 | 4 | 2 |
| 13 | 48 | 1 | 24 | 2 | 12 | 2 | 4 | 3 |
| 13' | 48 | 1 | 8 | 6 | 4 | 2 | 4 | 1 |
| 13" | 48 | 1 | 12 | 4 | 4 | 3 | 4 | 1 |
| 13‴ | 48 | 1 | 4 | 12 | 4 | 1 | 4 | 1 |
| 14 | 52 | 1 | 4 | 13 | 4 | 1 | 4 | 1 |

SRS configuration information corresponding to 6', 9', 10', 11', 13', 13", and 13‴ in Table 2 is newly added to existing SRS configuration information. It can be learned from Table 2 that, regardless of whether a smaller granularity of the SRS transmission bandwidth (the bandwidth corresponding to the SRS transmission frequency band) is increased or more SRS frequency hopping bandwidth modes are added, the first SRS configuration information set is more favorable for a bandwidth capability of a terminal device with a low bandwidth capability. Therefore, a measurement range and measurement precision of the terminal device with a low bandwidth capability may be increased. The granularity of the SRS transmission bandwidth may correspond to a minimum quantity of RBs corresponding to the SRS transmission bandwidth, or may be understood as a minimum quantity of RBs corresponding to the frequency hopping bandwidths in Table 2, for example, four RBs. With a smaller granularity of the SRS transmission bandwidth, for example, two RBs being added, higher measurement precision can be implemented. A frequency hopping parameter may be understood as a ratio of an upper-level frequency hopping bandwidth corresponding to the frequency hopping parameter to a corresponding current frequency hopping bandwidth. For example, the frequency hopping parameter 4 in Table 2 is equal to a ratio obtained by dividing a value corresponding to the frequency hopping bandwidth 3 by a value corresponding to the frequency hopping bandwidth 4. For example, for the configuration 6', 1 (frequency hopping parameter 4) = 4 (frequency hopping bandwidth 3)/4 (frequency hopping bandwidth 4), and 3 (frequency hopping parameter 2) = 24 (frequency hopping bandwidth 1)/8 (frequency hopping bandwidth 2).

Step 1103: The terminal device determines the target SRS transmission frequency band based on the target SRS configuration information.

Step 1104: The terminal device transmits an SRS to the network device in the target SRS transmission frequency band.

Transmission efficiency of a terminal device with a low bandwidth capability can be ensured by using the foregoing SRS transmission method provided in this embodiment of this application.

Based on the foregoing embodiments, an embodiment of this application further provides a data transmission apparatus. The data transmission apparatus is applied to the communication system shown in FIG. 3, and is configured to implement the SRS transmission method shown in FIG. 4 or FIG. 11. Referring to FIG. 12, the SRS transmission apparatus 1200 includes a processing unit 1201 and a transceiver unit 1202. The SRS transmission apparatus 1200 may be a terminal device, configured to perform the operations of the terminal device in the SRS transmission method shown in FIG. 4 or FIG. 11. The SRS transmission apparatus 1200 may be a network device, configured to perform the operations of the network device in the SRS transmission method shown in FIG. 4 or FIG. 11.

Specifically, in an embodiment, when the SRS transmission apparatus 1200 is configured to perform the operations of the terminal device in the SRS transmission method shown in FIG. 4,
the processing unit 1201 is configured to determine a first frequency band, where a bandwidth of the first frequency band is greater than a maximum channel bandwidth supported by the terminal device.

The transceiver unit 1202 is configured to receive SRS configuration information from a network device, where the SRS configuration information is used to indicate an SRS transmission frequency band.

The processing unit 1201 is further configured to determine the SRS transmission frequency band based on the SRS configuration information, where the SRS transmission frequency band is included in the first frequency band.

The transceiver unit 1202 is further configured to transmit an SRS to the network device in the SRS transmission frequency band.

Specifically, the bandwidth of the first frequency band is smaller than or equal to a carrier bandwidth.

In an optional implementation, the transceiver unit 1202 is further configured to receive first information from the network device, where the first information is used to indicate the first frequency band; and when determining the first frequency band, the processing unit 1201 is specifically configured to determine the first frequency band based on the first information, or the first frequency band is predefined.

For example, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In an example implementation, the transceiver unit 1202 is further configured to receive second information from the network device, where the second information is used to indicate a second frequency band; and the processing unit 1201 is further configured to determine the second frequency band based on the second information, where the second frequency band is included in the first frequency band, and a bandwidth of the second frequency band is smaller than or equal to the maximum channel bandwidth supported by the terminal device.

In an example, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In another example, the second information includes a first index, and the first index corresponds to the second frequency band in the first frequency band; and when determining the second frequency band based on the second information, the processing unit 1201 is specifically configured to: determine the second frequency band based on the first index and a correspondence between the first index and the second frequency band.

In another example implementation, the processing unit 1201 is further configured to determine a second frequency band based on at least one of the following: a time location at which the terminal device transmits an SRS, a quantity of SRS transmissions, the SRS frequency hopping bandwidth, an SRS transmission bandwidth, and information related to the first frequency band. The information related to the first frequency band is an index of the first frequency band or a frequency domain resource location corresponding to the first frequency band. The second frequency band is included in the first frequency band, and a bandwidth of the second frequency band is smaller than or equal to the maximum channel bandwidth supported by the terminal device.

Specifically, the bandwidth of the second frequency band is greater than or equal to the SRS frequency hopping bandwidth.

In an optional implementation, the processing unit 1201 is further configured to determine to transmit SRSs in OFDM symbols included in different slots.

In a specific implementation, the processing unit 1201 is further configured to obtain a first frequency band set, where the first frequency band set includes a frequency band greater than the maximum channel bandwidth supported by the terminal device, or the first frequency band set includes a frequency band smaller than or equal to the maximum channel bandwidth supported by the terminal device and a frequency band greater than the maximum channel bandwidth supported by the terminal device; and when determining the first frequency band, the processing unit 1201 is specifically configured to: determine the first frequency band based on the first frequency band set.

The SRS transmission apparatus (the terminal device herein) provided in this embodiment of this application determines the first frequency band; receives the SRS configuration information from the network device, where the SRS configuration information is used to indicate the SRS transmission frequency band; determines the SRS transmission frequency band based on the SRS configuration information, where the SRS transmission frequency band is included in the first frequency band; and transmits the SRS to the network device in the SRS transmission frequency band, where the bandwidth of the first frequency band is greater than the maximum channel bandwidth supported by the terminal device. In this way, the terminal device can transmit an SRS within a larger frequency resource range, or a bandwidth corresponding to a transmission frequency band of the SRS is more suitable for a terminal device with a low bandwidth capability. Therefore, it is ensured that more reference information, for example, channel state information within a larger frequency range, can be provided through SRS measurement for data transmission between the network device and the terminal device, so that the network device can allocate a frequency resource suitable for the terminal device within the larger frequency range, thereby improving data transmission efficiency.

In another embodiment, when the SRS transmission apparatus 1200 is configured to perform the operations of the network device in the SRS transmission method shown in FIG. 4, the transceiver unit 1202 is configured to: send SRS configuration information to a terminal device, where the SRS configuration information is used to indicate an SRS transmission frequency band, and
receive an SRS transmitted by the terminal device in the SRS transmission frequency band, where the SRS transmission frequency band is determined by the terminal device based on the SRS configuration information, the SRS transmission frequency band is included in a first frequency band, and a bandwidth of the first frequency band is greater than a maximum channel bandwidth supported by the terminal device; and
the processing unit 1201 is configured to control the transceiver unit 1202 to send and receive data (or information, a signal, or the like).

Specifically, the bandwidth of the first frequency band is smaller than or equal to a carrier bandwidth.

In an optional implementation, the processing unit 1201 is further configured to send first information to the terminal device, where the first information is used to indicate the first frequency band.

For example, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In a specific implementation, the processing unit 1201 is further configured to send second information to the terminal device, where the second information is used to indicate a second frequency band, the second frequency band is included in the first frequency band, and a bandwidth of the second frequency band is smaller than or equal to the maximum channel bandwidth supported by the terminal device.

In an example, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In another example, the second information includes a first index, and the first index corresponds to the second frequency band in the first frequency band.

Specifically, the bandwidth of the second frequency band is greater than or equal to the SRS frequency hopping bandwidth.

In a possible implementation, the processing unit 1201 is further configured to configure a second frequency band set for the terminal device, where the second frequency band set includes a frequency band greater than the maximum channel bandwidth supported by the terminal device, or the second frequency band set includes a frequency band smaller than or equal to the maximum channel bandwidth supported by the terminal device and a frequency band greater than the maximum channel bandwidth supported by the terminal device.

The SRS transmission apparatus (the network device herein) provided in this embodiment of this application sends the SRS configuration information to the terminal device, where the SRS configuration information is used to indicate the SRS transmission frequency band; and receives the SRS transmitted by the terminal device in the SRS transmission frequency band. The SRS transmission frequency band is determined by the terminal device based on the SRS configuration information, the SRS transmission frequency band is included in the first frequency band, and the bandwidth of the first frequency band is greater than the maximum channel bandwidth supported by the terminal device. In this way, the terminal device can transmit an SRS within a larger frequency resource range, or a bandwidth corresponding to a transmission frequency band of the SRS is more suitable for a terminal device with a low bandwidth capability. Therefore, it is ensured that more reference information, for example, channel state information within a larger frequency range, can be provided through SRS measurement for data transmission between the network device and the terminal device, so that the network device can allocate a frequency resource suitable for the terminal device within the larger frequency range, thereby improving data transmission efficiency.

In another embodiment, when the SRS transmission apparatus 1200 is configured to perform the operations of the terminal device in the SRS transmission method shown in FIG. 11,
the processing unit 1201 is configured to determine a first SRS configuration information set, where the first SRS configuration information set includes at least two pieces of SRS configuration information;
determine target SRS configuration information based on the first SRS configuration information set, where the target SRS configuration information is used to indicate a target SRS transmission frequency band; and
determine the target SRS transmission frequency band based on the target SRS configuration information; and
the transceiver unit 1202 is configured to transmit an SRS to a network device in the target SRS transmission frequency band.

In an optional implementation, when determining the first SRS configuration information set, the processing unit 1201 is specifically configured to:
determine the first SRS configuration information set in at least one SRS configuration information set based on a maximum channel bandwidth supported by the terminal device; or
control the transceiver unit 1202 to receive third information from the network device, where the third information is used to indicate the first SRS configuration information set to be used by the terminal device, and determine the first SRS configuration information set based on the third information.

Transmission efficiency of a terminal device with a low bandwidth capability can be ensured by using the SRS transmission apparatus (the terminal device herein) provided in this embodiment of this application.

In another embodiment, when the SRS transmission apparatus 1200 is configured to perform the operations of the network device in the SRS transmission method shown in FIG. 11,
the transceiver unit 1202 is configured to receive, in a target SRS transmission frequency band, an SRS sent by a terminal device, where the target SRS transmission frequency band is determined by the terminal device based on target SRS configuration information, and the target SRS configuration information is used to indicate the target SRS transmission frequency band; and
the processing unit 1201 is configured to control the transceiver unit 1202 to send and receive data (or information, a signal, or the like).

In an optional implementation, the transceiver unit 1202 is further configured to send third information to the terminal device, where the third information is used to indicate a first SRS configuration information set to be used by the terminal device.

Transmission efficiency of a terminal device with a low bandwidth capability can be ensured by using the SRS transmission apparatus (the network device herein) provided in this embodiment of this application.

It should be noted that, in the embodiments of this application, division into the units is exemplary, and is merely a logical function division. In actual implementation, another division manner may be used. Function units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

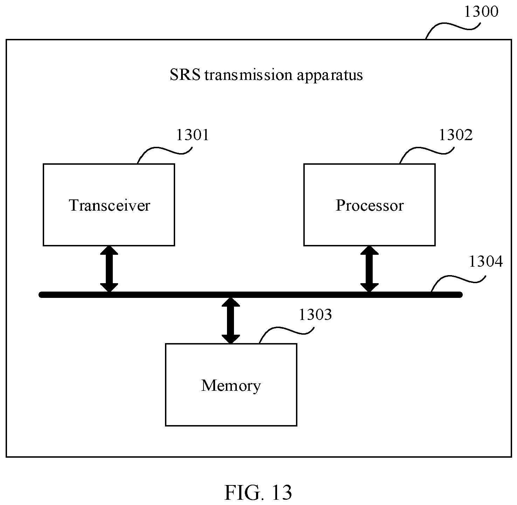

Based on the foregoing embodiments, an embodiment of this application further provides an SRS transmission apparatus. The SRS transmission apparatus is applied to the communication system shown in FIG. 3, and is configured to implement the SRS transmission method shown in FIG. 4 or FIG. 11. Referring to FIG. 13, the SRS transmission apparatus 1300 may include a transceiver 1301 and a processor 1302, and optionally may further include a memory 1303. The processor 1302 may be a central processing unit (central processing unit, CPU), a network processor (network processor, NP), a combination of a CPU and an NP, or the like. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1302 may implement the foregoing functions by hardware or by hardware executing corresponding software.

The transceiver 1301 and the processor 1302 are connected to each other. Optionally, the transceiver 1301 and the processor 1302 are connected to each other through a bus 1304. The bus 1304 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 13, but this does not mean that there is only one bus or only one type of bus.

The memory 1303 is coupled to the processor 1302, and is configured to store a program and the like necessary for the SRS transmission apparatus 1300. For example, the program may include program code, and the program code includes computer operation instructions. The memory 1303 may include a RAM, and may further include a non-volatile memory (non-volatile memory), for example, at least one magnetic disk storage. The processor 1302 executes the application program stored in the memory 1303, to implement functions of the SRS transmission apparatus 1300.

The SRS transmission apparatus 1300 may be a terminal device, configured to perform the operations of the terminal device in the SRS transmission method shown in FIG. 4 or FIG. 11. The SRS transmission apparatus 1300 may be a network device, configured to perform the operations of the network device in the SRS transmission method shown in FIG. 4 or FIG. 11.

Specifically, in an embodiment, when the SRS transmission apparatus 1300 is configured to perform the operations of the terminal device in the SRS transmission method shown in FIG. 4,
the processor 1302 is configured to determine a first frequency band where a bandwidth of the first frequency band is greater than a maximum channel bandwidth supported by the terminal device; and
the transceiver 1301 is configured to receive SRS configuration information from a network device, where the SRS configuration information is used to indicate an SRS transmission frequency band.

The processor 1302 is further configured to determine the SRS transmission frequency band based on the SRS configuration information, where the SRS transmission frequency band is included in the first frequency band.

The transceiver 1301 is further configured to transmit an SRS to the network device in the SRS transmission frequency band.

Specifically, the bandwidth of the first frequency band is smaller than or equal to a carrier bandwidth.

In an optional implementation, the transceiver 1301 is further configured to receive first information from the network device, where the first information is used to indicate the first frequency band; and when determining the first frequency band, the processor 1302 is specifically configured to determine the first frequency band based on the first information, or the first frequency band is predefined.

For example, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In an example implementation, the transceiver 1301 is further configured to receive second information from the network device, where the second information is used to indicate a second frequency band; and the processor 1302 is further configured to determine the second frequency band based on the second information, where the second frequency band is included in the first frequency band, and a bandwidth of the second frequency band is smaller than or equal to the maximum channel bandwidth supported by the terminal device.

In an example, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In another example, the second information includes a first index, and the first index corresponds to the second frequency band in the first frequency band; and when determining the second frequency band based on the second information, the processor 1302 is specifically configured to: determine the second frequency band based on the first index and a correspondence between the first index and the second frequency band.

In another example implementation, the processor 1302 is further configured to determine a second frequency band based on at least one of the following: a time location at which the terminal device transmits an SRS, a quantity of SRS transmissions, the SRS frequency hopping bandwidth, an SRS transmission bandwidth, and information related to the first frequency band. The information related to the first frequency band is an index of the first frequency band or a frequency domain resource location corresponding to the first frequency band. The second frequency band is included in the first frequency band, and a bandwidth of the second frequency band is smaller than or equal to the maximum channel bandwidth supported by the terminal device.

Specifically, the bandwidth of the second frequency band is greater than or equal to the SRS frequency hopping bandwidth.

In an optional implementation, the processor 1302 is further configured to determine to transmit SRSs in OFDM symbols included in different slots.

In a specific implementation, the processor 1302 is further configured to obtain a first frequency band set, where the first frequency band set includes a frequency band greater than the maximum channel bandwidth supported by the terminal device, or the first frequency band set includes a frequency band smaller than or equal to the maximum channel bandwidth supported by the terminal device and a frequency band greater than the maximum channel bandwidth supported by the terminal device. When determining the first frequency band, the processor 1302 is specifically configured to: determine the first frequency band based on the first frequency band set.

The SRS transmission apparatus (the terminal device herein) provided in this embodiment of this application determines the first frequency band; receives the SRS configuration information from the network device, where the SRS configuration information is used to indicate the SRS transmission frequency band; determines the SRS transmission frequency band based on the SRS configuration information, where the SRS transmission frequency band is included in the first frequency band; and transmits the SRS to the network device in the SRS transmission frequency band, where the bandwidth of the first frequency band is greater than the maximum channel bandwidth supported by the terminal device. In this way, the terminal device can transmit an SRS within a larger frequency resource range, or a bandwidth corresponding to a transmission frequency band of the SRS is more suitable for a terminal device with a low bandwidth capability. Therefore, it is ensured that more reference information, for example, channel state information within a larger frequency range, can be provided through SRS measurement for data transmission between the network device and the terminal device, so that the network device can allocate a frequency resource suitable for the terminal device within the larger frequency range, thereby improving data transmission efficiency.

In another embodiment, when the SRS transmission apparatus 1300 is configured to perform the operations of the network device in the SRS transmission method shown in FIG. 4,
the transceiver 1301 is configured to: send SRS configuration information to a terminal device, where the SRS configuration information is used to indicate an SRS transmission frequency band, and
receive an SRS transmitted by the terminal device in the SRS transmission frequency band, where the SRS transmission frequency band is determined by the terminal device based on the SRS configuration information, the SRS transmission frequency band is included in a first frequency band, and a bandwidth of the first frequency band is greater than a maximum channel bandwidth supported by the terminal device; and
the processor 1302 is configured to control the transceiver 1301 to send and receive data (or information, a signal, or the like).

Specifically, the bandwidth of the first frequency band is smaller than or equal to a carrier bandwidth.

In an optional implementation, the processor 1302 is further configured to send first information to the terminal device, where the first information is used to indicate the first frequency band.

For example, the SRS configuration information further includes an SRS frequency hopping bandwidth; the SRS frequency hopping bandwidth is greater than or equal to a bandwidth corresponding to the SRS transmission frequency band; and the bandwidth of the first frequency band is greater than the SRS frequency hopping bandwidth.

In a specific implementation, the processor 1302 is further configured to send second information to the terminal device, where the second information is used to indicate a second frequency band, the second frequency band is included in the first frequency band, and a bandwidth of the second frequency band is smaller than or equal to the maximum channel bandwidth supported by the terminal device.

In an example, the second information includes at least a frequency domain resource location corresponding to the second frequency band; and the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

In another example, the second information includes a first index, and the first index corresponds to the second frequency band in the first frequency band.

Specifically, the bandwidth of the second frequency band is greater than or equal to the SRS frequency hopping bandwidth.

In a possible implementation, the processor 1302 is further configured to configure a second frequency band set for the terminal device, where the second frequency band set includes a frequency band greater than the maximum channel bandwidth supported by the terminal device, or the second frequency band set includes a frequency band smaller than or equal to the maximum channel bandwidth supported by the terminal device and a frequency band greater than the maximum channel bandwidth supported by the terminal device.

The SRS transmission apparatus (the network device herein) provided in this embodiment of this application sends the SRS configuration information to the terminal device, where the SRS configuration information is used to indicate the SRS transmission frequency band; and receives the SRS transmitted by the terminal device in the SRS transmission frequency band. The SRS transmission frequency band is determined by the terminal device based on the SRS configuration information, the SRS transmission frequency band is included in the first frequency band, and the bandwidth of the first frequency band is greater than the maximum channel bandwidth supported by the terminal device. In this way, the terminal device can transmit an SRS within a larger frequency resource range, or a bandwidth corresponding to a transmission frequency band of the SRS is more suitable for a terminal device with a low bandwidth capability. Therefore, it is ensured that more reference information, for example, channel state information within a larger frequency range can be provided through SRS measurement for data transmission between the network device and the terminal device, so that the network device can allocate a frequency resource suitable for the terminal device within the larger frequency range, thereby improving data transmission efficiency.

In another embodiment, when the SRS transmission apparatus 1300 is configured to perform the operations of the terminal device in the SRS transmission method shown in FIG. 11,
the processor 1302 is configured to determine a first SRS configuration information set, where the first SRS configuration information set includes at least two pieces of SRS configuration information;
determine target SRS configuration information based on the first SRS configuration information set, where the target SRS configuration information is used to indicate a target SRS transmission frequency band; and
determine the target SRS transmission frequency band based on the target SRS configuration information; and
the transceiver 1301 is configured to transmit an SRS to a network device in the target SRS transmission frequency band.

In an optional implementation, when determining the first SRS configuration information set, the processor 1302 is specifically configured to:
determine the first SRS configuration information set in at least one SRS configuration information set based on a maximum channel bandwidth supported by the terminal device; or
control the transceiver 1301 to receive third information from the network device, where the third information is used to indicate the first SRS configuration information set to be used by the terminal device, and determine the first SRS configuration information set based on the third information.

Transmission efficiency of a terminal device with a low bandwidth capability can be ensured by using the SRS transmission apparatus (the terminal device herein) provided in this embodiment of this application.

In another embodiment, when the SRS transmission apparatus 1300 is configured to perform the operations of the network device in the SRS transmission method shown in FIG. 11,
the transceiver 1301 is configured to receive, in a target SRS transmission frequency band, an SRS sent by a terminal device, where the target SRS transmission frequency band is determined by the terminal device based on target SRS configuration information, and the target SRS configuration information is used to indicate the target SRS transmission frequency band; and
the processor 1302 is configured to control the transceiver 1301 to send and receive data (or information, a signal, or the like).

In an optional implementation, the transceiver 1301 is further configured to send third information to the terminal device, where the third information is used to indicate a first SRS configuration information set to be used by the terminal device.

Transmission efficiency of a terminal device with a low bandwidth capability can be ensured by using the SRS transmission apparatus (the network device herein) provided in this embodiment of this application.

It should be noted that the signaling in the embodiments of this application may be carried in one or more of a physical downlink control channel, a physical downlink shared channel, or a signal. This is not limited in this application. For example, the signal may be a demodulation reference signal (demodulation reference signal, DMRS), a CSI-RS, or the like.

It should be noted that although the foregoing embodiments are described by using a terminal device with a low bandwidth capability as an example, the data transmission method provided in this application may also be applied to a terminal device not compatible with a later release, for example, a terminal device of NR release (release) 17 or a release later than NR release (release) 17, or a terminal device in a future communication system. This is not limited in this application.

It should be noted that, in the embodiments of this application, if a corresponding center frequency at which the terminal device sends an SRS is different from a corresponding center frequency at which the terminal device sends a PUSCH or a PUCCH, the terminal device may not transmit the SRS or transmit the PUSCH or the PUCCH in a truncated format. The PUSCH or the PUCCH in the truncated format may be understood as follows: In a normal data transmission process, it is assumed that the PUSCH or the PUCCH may use X symbols in one slot for data transmission, but after SRS transmission is considered, only Y symbols in the slot can be used for data transmission. Y is less than X. The PUSCH or PUCCH transmission implemented in this way may be considered as transmission of the PUSCH or the PUCCH in the truncated format.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Definitely, a person skilled in the art can make various modifications and variations to the embodiments of this application without departing from the scope of the embodiments of this application. This application is intended to cover these modifications and variations of the embodiments of this application provided that they fall within the scope of the claims of this application and equivalent technologies thereof.

## Claims

1. A sounding reference signal SRS transmission method, comprising:
determining, by a terminal device, a first frequency band, wherein a bandwidth of the first frequency band is greater than a maximum channel bandwidth supported by the terminal device;
receiving, by the terminal device, SRS configuration information from a network device, wherein the SRS configuration information indicates an SRS transmission frequency band, and a bandwidth of the SRS transmission frequency band is smaller than or equal to the maximum channel bandwidth supported by the terminal device;
determining, by the terminal device, the SRS transmission frequency band based on the SRS configuration information, wherein
the SRS transmission frequency band is comprised in the first frequency band; and
transmitting, by the terminal device, an SRS to the network device in the SRS transmission frequency band.

2. The method according to claim 1, wherein
the bandwidth of the first frequency band is smaller than or equal to a carrier bandwidth.

3. The method according to claim 1 or 2, wherein the determining, by a terminal device, a first frequency band comprises:
receiving, by the terminal device, first information from the network device, wherein the first information indicates the first frequency band, and
determining, by the terminal device, the first frequency band based on the first information; or
the first frequency band is predefined.

4. The method according to any one of claims 1 to 3, wherein the SRS configuration information further comprises an SRS frequency hopping bandwidth;
the SRS frequency hopping bandwidth is greater than or equal to the bandwidth corresponding to the SRS transmission frequency band; and
the bandwidth of the first frequency band is greater than the SRS frequency hopping bandwidth.

5. The method according to any one of claims 1 to 4, wherein the method further comprises:
receiving, by the terminal device, second information from the network device, wherein the second information indicates a second frequency band; and
determining, by the terminal device, the second frequency band based on the second information, wherein the second frequency band is comprised in the first frequency band, and a bandwidth of the second frequency band is smaller than or equal to the maximum channel bandwidth supported by the terminal device.

6. The method according to claim 5, comprising:
the second information comprises at least a frequency domain resource location corresponding to the second frequency band; and the frequency domain resource location corresponding to the second frequency band is one of the following:
a frequency domain start location corresponding to the second frequency band and the bandwidth of the second frequency band;
a frequency domain start location and a frequency domain end location of the second frequency band;
a frequency domain start location of the second frequency band, or the frequency domain resource location corresponding to the second frequency band is a frequency domain end location of the second frequency band;
an offset of the second frequency band relative to a frequency domain start location of the first frequency band in the first frequency band;
an offset of the second frequency band relative to a frequency domain end location of the first frequency band in the first frequency band.

7. The method according to claim 5, wherein the second information comprises a first index, and the first index corresponds to the second frequency band in the first frequency band; and
the determining, by the terminal device, the second frequency band based on the second information comprises:
determining, by the terminal device, the second frequency band based on the first index and a correspondence between the first index and the second frequency band.

8. The method according to any one of claims 1 to 4, wherein the method further comprises:
determining, by the terminal device, a second frequency band based on at least one of the following: a time location at which the terminal device transmits an SRS, a quantity of SRS transmissions, the SRS frequency hopping bandwidth, an SRS transmission bandwidth, and information related to the first frequency band, wherein
the information related to the first frequency band is an index of the first frequency band or a frequency domain resource location corresponding to the first frequency band; and
the second frequency band is comprised in the first frequency band, and a bandwidth of the second frequency band is smaller than or equal to the maximum channel bandwidth supported by the terminal device.

9. The method according to any one of claims 5 to 8, wherein the bandwidth of the second frequency band is greater than or equal to the SRS frequency hopping bandwidth.

10. The method according to any one of claims 1 to 9, wherein the method further comprises:
determining, by the terminal device, to transmit SRSs in OFDM symbols comprised in different slots.

11. The method according to any one of claims 1 to 10, wherein the method further comprises:
obtaining, by the terminal device, a first frequency band set, wherein the first frequency band set comprises a frequency band greater than the maximum channel bandwidth supported by the terminal device, or the first frequency band set comprises a frequency band smaller than or equal to the maximum channel bandwidth supported by the terminal device and a frequency band greater than the maximum channel bandwidth supported by the terminal device; and
the determining, by a terminal device, a first frequency band comprises:
determining, by the terminal device, the first frequency band based on the first frequency band set.

12. A sounding reference signal SRS transmission method, comprising:
sending, by a network device, SRS configuration information to a terminal device, wherein the SRS configuration information indicates an SRS transmission frequency band; and
receiving, by the network device, an SRS transmitted by the terminal device in the SRS transmission frequency band, wherein
the SRS transmission frequency band is determined by the terminal device based on the SRS configuration information, and a bandwidth of the SRS transmission frequency band is smaller than or equal to a maximum channel bandwidth supported by the terminal device;
the SRS transmission frequency band is comprised in a first frequency band; and
a bandwidth of the first frequency band is greater than the maximum channel bandwidth supported by the terminal device.

13. The method according to claim 12, wherein
the bandwidth of the first frequency band is smaller than or equal to a carrier bandwidth.

14. The method according to claim 12 or 13, wherein the method further comprises:
sending, by the network device, first information to the terminal device, wherein the first information indicates the first frequency band.

15. The method according to any one of claims 12 to 14, wherein the SRS configuration information further comprises an SRS frequency hopping bandwidth;
the SRS frequency hopping bandwidth is greater than or equal to the bandwidth corresponding to the SRS transmission frequency band; and
the bandwidth of the first frequency band is greater than the SRS frequency hopping bandwidth.

16. The method according to any one of claims 12 to 15, wherein the method further comprises:
sending, by the network device, second information to the terminal device, wherein the second information indicates a second frequency band, the second frequency band is comprised in the first frequency band, and a bandwidth of the second frequency band is smaller than or equal to the maximum channel bandwidth supported by the terminal device.

17. The method according to claim 16, wherein
the second information comprises at least a frequency domain resource location corresponding to the second frequency band; and the frequency domain resource location corresponding to the second frequency band is one of the following:
a frequency domain start location corresponding to the second frequency band and the bandwidth of the second frequency band;
a frequency domain start location and a frequency domain end location of the second frequency band, or the frequency domain resource location corresponding to the second frequency band is a frequency domain start location of the second frequency band;
a frequency domain end location of the second frequency band;
an offset of the second frequency band relative to a frequency domain start location of the first frequency band in the first frequency band;
an offset of the second frequency band relative to a frequency domain end location of the first frequency band in the first frequency band.

18. The method according to claim 16, wherein the second information comprises a first index, and the first index corresponds to the second frequency band in the first frequency band.

19. The method according to any one of claims 16 to 18, wherein the bandwidth of the second frequency band is greater than or equal to the SRS frequency hopping bandwidth.

20. The method according to any one of claims 12 to 19, wherein the method further comprises:
configuring, by the network device, a second frequency band set for the terminal device, wherein the second frequency band set comprises a frequency band greater than the maximum channel bandwidth supported by the terminal device, or the second frequency band set comprises a frequency band smaller than or equal to the maximum channel bandwidth supported by the terminal device and a frequency band greater than the maximum channel bandwidth supported by the terminal device.

21. A sounding reference signal SRS transmission apparatus, comprising:
a processor, configured to determine a first frequency band, wherein a bandwidth of the first frequency band is greater than a maximum channel bandwidth supported by the terminal device; and
a transceiver, configured to receive SRS configuration information from a network device, wherein the SRS configuration information indicates an SRS transmission frequency band, and a bandwidth of the SRS transmission frequency band is smaller than or equal to the maximum channel bandwidth supported by the terminal device, wherein
the processor is further configured to determine the SRS transmission frequency band based on the SRS configuration information, wherein the SRS transmission frequency band is comprised in the first frequency band; and
the transceiver is further configured to transmit an SRS to the network device in the SRS transmission frequency band.

22. The apparatus according to claim 21, wherein
the bandwidth of the first frequency band is smaller than or equal to a carrier bandwidth.

23. The apparatus according to claim 21 or 22, wherein
the transceiver is further configured to receive first information from the network device, wherein the first information indicates the first frequency band; and
when determining the first frequency band, the processor is specifically configured to:
determine the first frequency band based on the first information; or
the first frequency band is predefined.

24. The apparatus according to any one of claims 21 to 23, wherein the SRS configuration information further comprises an SRS frequency hopping bandwidth;
the SRS frequency hopping bandwidth is greater than or equal to the bandwidth corresponding to the SRS transmission frequency band; and
the bandwidth of the first frequency band is greater than the SRS frequency hopping bandwidth.

25. The apparatus according to any one of claims 21 to 24, wherein
the transceiver is further configured to receive second information from the network device, wherein the second information indicates a second frequency band; and
the processor is further configured to determine the second frequency band based on the second information, wherein the second frequency band is comprised in the first frequency band, and a bandwidth of the second frequency band is smaller than or equal to the maximum channel bandwidth supported by the terminal device.

26. The apparatus according to claim 25, wherein
the second information comprises at least a frequency domain resource location corresponding to the second frequency band; and
the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

27. The apparatus according to claim 25, wherein the second information comprises a first index, and the first index corresponds to the second frequency band in the first frequency band; and
when determining the second frequency band based on the second information, the processor is specifically configured to:
determine the second frequency band based on the first index and a correspondence between the first index and the second frequency band.

28. The apparatus according to any one of claims 21 to 24, wherein
the processor is further configured to determine a second frequency band based on at least one of the following:
a time location at which the terminal device transmits an SRS, a quantity of SRS transmissions, the SRS frequency hopping bandwidth, an SRS transmission bandwidth, and information related to the first frequency band, wherein
the information related to the first frequency band is an index of the first frequency band or a frequency domain resource location corresponding to the first frequency band; and
the second frequency band is comprised in the first frequency band, and a bandwidth of the second frequency band is smaller than or equal to the maximum channel bandwidth supported by the terminal device.

29. The apparatus according to any one of claims 25 to 28, wherein the bandwidth of the second frequency band is greater than or equal to the SRS frequency hopping bandwidth.

30. The apparatus according to any one of claims 21 to 29, wherein the processor is further configured to:
determine to transmit SRSs in OFDM symbols comprised in different slots.

31. The apparatus according to any one of claims 21 to 30, wherein
the processor is further configured to obtain a first frequency band set, wherein the first frequency band set comprises a frequency band greater than the maximum channel bandwidth supported by the terminal device, or the first frequency band set comprises a frequency band smaller than or equal to the maximum channel bandwidth supported by the terminal device and a frequency band greater than the maximum channel bandwidth supported by the terminal device; and
when determining the first frequency band, the processor is specifically configured to:
determine the first frequency band based on the first frequency band set.

32. A sounding reference signal SRS transmission apparatus, comprising:
a transceiver, configured to: send SRS configuration information to a terminal device, wherein the SRS configuration information indicates an SRS transmission frequency band, and
receive an SRS transmitted by the terminal device in the SRS transmission frequency band, wherein
the SRS transmission frequency band is determined by the terminal device based on the SRS configuration information, the SRS transmission frequency band is comprised in a first frequency band, a bandwidth of the first frequency band is greater than a maximum channel bandwidth supported by the terminal device, and a bandwidth of the SRS transmission frequency band is smaller than or equal to the maximum channel bandwidth supported by the terminal device; and
a processor, configured to control the transceiver to send and receive data.

33. The apparatus according to claim 32, wherein
the bandwidth of the first frequency band is smaller than or equal to a carrier bandwidth.

34. The apparatus according to claim 32 or 33, wherein the transceiver is further configured to:
send first information to the terminal device, wherein the first information indicates the first frequency band.

35. The apparatus according to any one of claims 32 to 34, wherein the SRS configuration information further comprises an SRS frequency hopping bandwidth;
the SRS frequency hopping bandwidth is greater than or equal to the bandwidth corresponding to the SRS transmission frequency band; and
the bandwidth of the first frequency band is greater than the SRS frequency hopping bandwidth.

36. The apparatus according to any one of claims 32 to 35, wherein the transceiver is further configured to:
send second information to the terminal device, wherein the second information indicates a second frequency band, the second frequency band is comprised in the first frequency band, and a bandwidth of the second frequency band is smaller than or equal to the maximum channel bandwidth supported by the terminal device.

37. The apparatus according to claim 36, wherein
the second information comprises at least a frequency domain resource location corresponding to the second frequency band; and
the frequency domain resource location corresponding to the second frequency band is a frequency domain start location corresponding to the second frequency band and the bandwidth of the second frequency band, or the frequency domain resource location corresponding to the second frequency band is a frequency domain start location and a frequency domain end location of the second frequency band, or the frequency domain resource location corresponding to the second frequency band is a frequency domain start location of the second frequency band, or the frequency domain resource location corresponding to the second frequency band is a frequency domain end location of the second frequency band, or the frequency domain resource location corresponding to the second frequency band is an offset of the second frequency band relative to a frequency domain start location of the first frequency band in the first frequency band, or the frequency domain resource location corresponding to the second frequency band is an offset of the second frequency band relative to a frequency domain end location of the first frequency band in the first frequency band.

38. The apparatus according to claim 36, wherein the second information comprises a first index, and the first index corresponds to the second frequency band in the first frequency band.

39. The apparatus according to any one of claims 36 to 38, wherein the bandwidth of the second frequency band is greater than or equal to the SRS frequency hopping bandwidth.

40. The apparatus according to any one of claims 32 to 39, wherein the processor is further configured to:
configure a second frequency band set for the terminal device, wherein the second frequency band set comprises a frequency band greater than the maximum channel bandwidth supported by the terminal device, or the second frequency band set comprises a frequency band smaller than or equal to the maximum channel bandwidth supported by the terminal device and a frequency band greater than the maximum channel bandwidth supported by the terminal device.

41. A communication system, comprising the sounding reference signal SRS transmission apparatus according to any one of claims 21 to 31 and the SRS transmission apparatus according to any one of claims 32 to 40.

42. A computer-readable storage medium, wherein the computer-readable storage medium stores computer-executable instructions, and when invoked by a computer, the computer-executable instructions are used to enable the computer to perform the method according to any one of claims 1 to 11, or the method according to any one of claims 12 to 20.

43. A computer program product comprising instructions, wherein when the product runs on a computer, the computer is enabled to perform the method according to any one of claims 1 to 11, or the method according to any one of claims 12 to 20.

44. A chip, wherein the chip is coupled to a memory and is configured to read and execute program instructions stored in the memory, to implement the method according to any one of claims 1 to 11, or perform the method according to any one of claims 12 to 20.
